# EUROPÄISCHE PATENTSCHRIFT

(11) **EP 3 669 088 B1**
(45) Veröffentlichungstag und Bekanntmachung des Hinweises auf die Patenterteilung: **29.06.2022**
(21) Anmeldenummer: 18759846.1
(22) Anmeldetag: 07.08.2018
(51) Int. Cl.: F16B 5/06, H01R 13/508, F16B 5/07, F16B 21/16, F16B 21/18

(54) **STECKVERBINDERGEHÄUSE MIT VERRIEGELUNGSMECHANIK**
PLUG CONNECTOR HOUSING WITH LOCKING MECHANISM
BOÎTIER DE CONNECTEUR AVEC MÉCANISME DE VERROUILLAGE

(30) Priorität: 18.08.2017 DE 102017118918; 14.12.2017 DE 102017130005; 26.01.2018 DE 102018101789
(43) Veröffentlichungstag der Anmeldung: 24.06.2020
(73) Patentinhaber: HARTING Electric GmbH & Co. KG, 32339 Espelkamp (DE)
(72) Erfinder: SCHLEGEL, Bernard, 32369 Rahden (DE)
(74) Vertreter: Ridderbusch, Oliver
(86) Internationale Anmeldenummer: PCT/DE2018/100694
(87) Internationale Veröffentlichungsnummer: WO 2019/034203

(56) Entgegenhaltungen:
- DE-A1-102008 060 561

## Beschreibung

Die Erfindung betrifft ein zumindest zweiteiliges Steckverbindergehäuse mit einem Seitenwände aufweisenden Gehäuseoberteil und einem dazu passenden Gehäuseunterteil, und mit einer Verriegelungsmechanik für das Steckverbindergehäuse.

Die Erfindung betrifft dabei insbesondere eine Verriegelungsmechanik mit einer einen Druckknopf umfassenden Betätigungsmechanik mittels der ein Verriegelungselement im Inneren des Steckverbindergehäuses von außen manuell betätigt wird, sowie ein eine derartige Verriegelungsmechanik aufweisendes Gehäuse.

Derartige Verriegelungsmechaniken werden benötigt, um einen Steckverbinder komfortabel verriegeln und entriegeln zu können.

### Stand der Technik

Im Stand der Technik sind asymmetrische, ringförmig ausgeführte Spiralfedern bekannt. Zuweilen werden sie auch als "schräg gewickelte Feder" und/oder unter dem Namen "Bal Seal-Feder" bezeichnet. Insbesondere sind solche Federn durch die US-Amerikanische Firma "Bal Seal Engineering" unter anderem aus einer Vielzahl von Patentanmeldungen bekannt geworden. In der dafür grundlegenden Druckschrift EP 0 379 159 B1 ist die Bauform einer solchen asymmetrische Spiralfeder ausführlich dargestellt. Weiterhin wird in der Druckschrift EP 2 259 383 B1 desselben Anmelders eine Verrastung unter Verwendung einer solchen Feder gemäß dem Kugelschreiberprinzip beschrieben.

Im Stand der Technik sind weiterhin Verriegelungen für Steckverbinder bekannt.

Die Druckschrift EP O 731 534 B1 offenbart einen außerhalb eines Gehäuses angeordneten und betätigbaren U-förmigen Verriegelungsbügel, der um Lagerzapfen einer Gehäusehälfte schwenkbar ist. Der U-förmige Verriegelungsbügel besitzt Taschen, in die jeweils ein Federelement eingefügt ist. Diese Federelemente wirken beim Schließen des Verriegelungsbügels derart auf Verriegelungszapfen der anderen Gehäusehälfte ein, dass die Gehäusehälften federnd gegeneinandergepresst sind. Weiterhin ist der Einsatz eines kipphebelartigen Verriegelungselements als vorteilhafte Ausgestaltung offenbart. Durch diese Erfindung werden mit geringen Bedienkräften hohe Haltekräfte ermöglicht.

Aus der Druckschrift DE 10 2008 060 561 A1 ist eine Verriegelungsvorrichtung für ein zweiteiliges Gehäuse bekannt, bei der an mindestens einer von zwei gegenüberliegenden Seitenwänden des Gehäuseoberteiles innerhalb von kreisförmigen Anformungen jeweils ein von außen bedienbarer Betätigungsknopf angeordnet ist. Der Betätigungsknopf ist als kombinierter Dreh- und Druckknopf ausgebildet und steht im Eingriff mit einem im Inneren des Gehäuseoberteiles angeordneten Federhebel. Der Federhebel bewirkt in Abhängigkeit der Stellung des Betätigungsknopfes mit einer Rastnase eines Gehäuseteils eine verrastende Verbindung zwischen den beiden Gehäuseteilen.

Zwischen den beiden Gehäuseteilen ist kein Dichtelement vorgesehen, so dass die beiden Gehäuseteile beim Zusammenfügen mittels dem Federhebel automatisch verrasten. Mit einem Druck auf die zwei Betätigungsknöpfe, die an den gegenüberliegenden Seitenwänden am Gehäuseoberteil angeordnet sind, wird eine Rastöffnung im Federhebel vom Rasthaken im Gehäuseunterteil entfernt und das Gehäuseoberteil kann entfernt werden. Für eine zusätzliche Verriegelung des Betätigungsknopfs ist der Betätigungsknopf um 90° zu drehen, wobei der Federhebel mittels einer speziell ausgebildeten mechanischen Vorrichtung derartig an dem Rasthaken festlegt wird, dass ein Entfernen des Gehäuseoberteiles nicht möglich ist.

Bei Vorsehung eines wünschenswerten Dichtelements zwischen den beiden Gehäuseteilen ist die automatische Verrastung der Gehäuseteile beeinträchtigt, da zur Bereitstellung einer erforderlichen Kompression des Dichtelements und damit auch der Verrastung der Gehäusehälften ein Druck auf das Gehäuse ausgeübt werden muss. Diese Maßnahme ist bei einer vorstehend beschriebenen Entfernung des Federhebels von der Rastnase auch bei einer unbeabsichtigten dementsprechenden Betätigung des multifunktionalen Betätigungsknopfs erneut nötig, was umständlich und verwirrend ist.

Weiterhin wird offenbart, dass der Betätigungsknopf innerhalb einer kreisförmigen Anformung angeordnet ist. Darin befindet sich eine farblich markierte Kreisringdichtung. Durch diese farbliche Markierung ist die zusätzliche Verriegelung mittels dem Betätigungsknopf hervorgehoben, was ebenfalls von einigen Benutzern als nicht selbsterklärend empfunden wird, nachdem die beiden zusammengefügten Gehäuseteile auch ohne die zusätzliche Verriegelung bereits mittels dem Federhebel verrastet und miteinander verriegelt sind.

Nachteilhaft bei diesem Stand der Technik ist demnach, dass die Bedienung einen relativ großen Aufwand erfordert und nicht sofort für Jedermann selbsterklärend ist und verwirrend sein kann. Außerdem wird die vorbestimmte Funktion der automatischen Verrastung der Gehäuseteile bei Vorsehung einer Dichtung zwischen den Gehäuseteilen beeinträchtigt.

Das Deutsche Patent- und Markenamt hat in der Prioritätsanmeldung 10 2017 130 005.8 zu vorliegender Anmeldung den folgenden Stand der Technik recherchiert: EP 2 746 599 A2, US 2013/0149031 A1, WO 2009/126968 A1 und US 9,482,255 B2.

Ferner hat das Deutsche Patent- und Markenamt zur Prioritätsanmeldung 10 2017 118 918.1 zu vorliegender Anmeldung den folgenden Stand der Technik recherchiert: EP 2 801 726 B1, CN 103 375 460 A, DE 196 43 708 C2 und DE 10 2008 060 561 A1.

Ebenfalls wurde dort die nachfolgende Nicht-Patentliteratur angeführt: Krause, Werner: Konstruktionselemente der Feinmechanik, Bd. 1, 3., aktualisierte Auflage. München: Hanser 2004, Seite 448-449.

### Aufgabenstellung

Aufgabe der Erfindung ist demnach, ein Steckverbindergehäuse mit einer komfortablen und in ihrer Bedienung leicht verständlichen, manuell betätigbaren Verriegelungsmechanik anzugeben, die dabei insbesondere eine wirkungsvolle Dichtung zweier verriegelter Gehäuseteile ermöglicht. Die Aufgabe wird mit den kennzeichnenden Merkmalen des unabhängigen Anspruchs 1 gelöst.

Vorteilhafte Ausführungen der Erfindung sind in den Unteransprüchen und/oder der nachfolgenden Beschreibung angegeben.

Es wurden außerdem insbesondere Techniken für Druckknopfverriegelungen entwickelt, die in den DE Patentanmeldungen Nr. 10 2017 118 918.1, angemeldet am 18.08.2017 mit der Bezeichnung "Druckknopfverriegelung für ein Steckverbindergehäuse" (nachfolgend als erste Druckknopfanmeldung bezeichnet) und Nr. 10 2017 130 005.8, angemeldet am 14.12.2017 mit der Bezeichnung "Steckverbinder" (nachfolgend als zweite Druckknopfanmeldung bezeichnet) offenbart sind.

Die vorliegende Erfindung umfasst ein Gehäuse eines Steckverbinders mit einem ersten und zweiten Gehäuseteil und mit wenigstens einer Verriegelungsmechanik zur Bereitstellung einer ersten entriegelnden Position und einer zweiten verriegelnden Position der beiden Gehäuseteile. Die Verriegelungsmechanik umfasst dabei einen Druckknopf, der sich in seiner axialen Längsrichtung von außen durch eine Durchgangsöffnung des ersten Gehäuseteils in das Innere des Gehäuses erstreckt, wobei der Druckknopf relativ zu dem Gehäuse zwischen einer vorbestimmten ersten und zweiten axialen Position verschiebbar angeordnet ist, die jeweils mit der ersten entriegelnden und zweiten verriegelnden Position der beiden Gehäuseteile korrespondiert. Im Inneren des Gehäuses ist ein Verriegelungselement vorgesehen, wobei der Druckknopf und das Verriegelungselement derart ausgebildet und angeordnet sind, dass der Druckknopf in Druckkontakt mit dem Verriegelungselement steht und mit dem Verriegelungselement derart zusammenwirkt, dass bei einer axialen Verschiebung des Druckknopfs von seiner ersten in seine zweite Position die zweite verriegelnde Position der beiden Gehäuseteile mit einem radialen Druckkontakt zwischen den beiden Gehäuseteilen bereitgestellt wird, so dass ein Spalt zwischen dem ersten und zweiten Gehäuseteil minimiert ist.

Auf diese Weise kann mittels einem zwischen den beiden Gehäuseteilen vorgesehenen Dichtelement in der zweiten verriegelnden Position der beiden Gehäuseteile eine Dichtung des verriegelten Gehäuses bereitgestellt werden, ohne die Funktion und Handhabung der Verriegelungsmechanik zu beeinträchtigen. Beim Zusammenfügen der beiden Gehäuseteile werden die beiden Gehäuseteile nämlich lediglich aneinandergefügt und sowohl die Verriegelung als auch die Dichtung hieran anschließend erst mittels der axialen Verschiebung des Druckknopfs bereitgestellt bzw. gelöst, der wie vorstehend beschrieben mit dem Verriegelungselement zusammenwirkt. Die Verriegelungsmechanik ist dabei besonders wirkungsvoll und außerdem einfach und unmissverständlich in ihrer Handhabung.

Nach einer besonders einfachen Ausführung kann das Verriegelungselement einstückig mit dem zweiten Gehäuseteil beispielsweise als Öse in dem zweiten Gehäuseteil ausgebildet sein, in die der Druckknopf geschoben wird, wobei die Durchgangsöffnung durch das erste Gehäuseteil, der Druckknopf und die Öse dabei korrespondierende Ausbildungen, Anordnungen und Abmessungen aufweisen können, so dass der Druckknopf eine Hebelwirkung ausübt und das erste und zweite Gehäuseteil radial zu seiner axialen Verschiebung in Steckrichtung aneinanderzieht.

Nach einer bevorzugten Ausführung kann das Verriegelungselement auch als individuelles Element ausgebildet sein, wobei der Druckknopf und/oder das Verriegelungselement in geeigneter Weise derart ausgebildet und/oder angeordnet sein können, dass mittels der axialen Verschiebung des Druckknopfs von seiner ersten Position in seine zweite Position außerdem ein axialer Druckkontakt zwischen dem Verriegelungselement und dem zweiten Gehäuseteil mit einer besonders stabilen Verbindung der beiden auf diese Weise miteinander verklemmten Gehäuseteile bereitgestellt wird.

Geeigneter Weise kann ein individuelles Verriegelungselement der vorstehenden Ausführung derart ausgebildet und angeordnet sein, dass es in der ersten entriegelnden Position unter Druckkontakt mit dem Druckknopf steht, wodurch das Verriegelungselement in der entriegelnden Position der Gehäuseteile ortsfest in dem ersten Gehäuseteil gehalten ist. Diese Ausführung hat vergleichsweise zu der vorstehenden besonders einfachen Ausführung mit dem einstückig mit dem zweiten Gehäuseteil ausgebildeten Verriegelungselement außerdem den Vorteil, dass das Verriegelungselement nach Trennung der beiden Gehäuseteile zusammen mit den anderen Komponenten der Verriegelungsmechanik in dem ersten Gehäuseteil beherbergt ist und nicht etwa an dem zweiten Gehäuseteil als dessen Rand überragende Öse verbleibt.

Das Verriegelungselement kann bei seiner vorstehenden Ausführung als individuelles Element derart ausgebildet und angeordnet sein, dass es in der zweiten Position des Druckknopfs unter radialem Druckkontakt mit dem Druckknopf steht und dabei außerdem unter radialem Druckkontakt mit dem zweiten Gehäuseteil steht, so dass ein besonders wirkungsvoller, stabiler radialer Druckkontakt der beiden Gehäuseteile bereitgestellt ist.

Das Verriegelungselement kann bei seiner vorstehenden Ausführung als individuelles Element weiterhin derart ausgebildet und angeordnet sein, dass das Verriegelungselement bei der Verschiebung des Druckknopfs in seine erste oder zweite Position jeweils eine axiale und radiale Schwenkbewegung ausführt. Hierdurch wird einerseits ein beabsichtigter radialer und axialer Druckkontakt des Verriegelungselements mit dem zweiten Gehäuseteil in der zweiten verriegelnden Position und andererseits eine wünschenswerte Beabstandung des Verriegelungselements von dem zweiten Gehäuseteil für eine Trennung der Gehäuseteile in ihrer ersten entriegelnden Position erzielt, die außerdem für eine Beherbergung des in dem ersten Gehäuseteil verbleibenden Verriegelungselement besonders geeignet ist.

Das Verriegelungselement kann dabei insbesondere im wesentlichen U-förmig in Form eines Bügels mit einer länglichen Schulter ausgebildet sein, wobei sich ausgehend von der Schulter zwei parallele Schenkel erstrecken, an deren Enden jeweils ein Haken ausgebildet ist, und wobei die Schenkel mit der Schulter einen abgerundeten Bogen bilden, so dass ein Durchgang bereitgestellt ist. Die Dicke des Verriegelungselements ist hierbei von dem Bogen zu seiner Schulter hin mit einer Abschrägung abgeflacht ausgebildet. Auf diese Weise kann der Druckknopf sich mit seinem in dem Inneren des Gehäuses angeordneten Abschnitt in den Durchgang des Verriegelungselements erstrecken und in Druckkontakt mit dem Bogen des Durchgangs stehen, so dass das bügelförmige Verriegelungselement mit seiner Schulter auf dem Druckknopf aufgehängt ist.

Ein für die vorstehende Ausführung des Verriegelungselements besonders geeigneter Druckknopf umfasst einen im Wesentlichen zylindrisch ausgebildeten Druckknopfstift mit einem sich in das Innere des Gehäuses erstreckenden zylindrischen Abschnitt, der in einen sich konisch verjüngenden Abschnitt übergeht, so dass eine Kontur des Druckknopfs bereitgestellt ist, die vorteilhaft mit dem Durchgang und dem abgerundeten Bogen des Verriegelungselements zusammenwirkt, so dass die vorstehend beschriebene vorteilhafte Schwenkbewegung des Verriegelungselements bei einer Verschiebung des Druckknopfs ausgeführt wird. Ein derartig ausgebildeter Druckknopf wird nachfolgend und anhand der Zeichnungen detailliert beschrieben.

In dem ersten Gehäuseteil kann zur Beherbergung und zur Führung der Bewegung des Verriegelungselements ein Kanal vorgesehen sein, in dem ein Federelement und die Schulter des Verriegelungselements derart angeordnet ist, dass das Federelement einen radialen Druck auf das Verriegelungselement ausübt.

Der Kanal kann geeigneter Weise in seinem Verlauf von der Schulter zu dem Bogen des Verriegelungselements eine Erweiterung aufweisen, so dass eine schienenartige Führung des Verriegelungselements bereitgestellt ist, die mit der Schulter und der Abschrägung des Verriegelungselements derart zusammenwirkt, dass bei der Verschiebung des Druckknopfs die vorstehend beschriebene vorteilhafte Schwenkbewegung des Verriegelungselements ausgeführt wird.

Zur Bereitstellung des radialen Drucks des Verriegelungselements auf das zweite Gehäuseteil und des eingangs beschriebenen radialen Druckkontakts der Gehäuseteile mit der Minimierung eines Spalts und der Bereitstellung einer Dichtung zwischen den Gehäuseteilen ist in der zweiten verriegelnden Position in dem zweiten Gehäuseteil geeigneter Weise eine Stufung ausgebildet, in die die Haken des Verriegelungselements greifen und auf diese Weise mit der Stufung zusammenwirken.

Der konische Abschnitt des Druckknopfs wirkt nämlich bei seiner Verschiebung von seiner ersten entriegelnden in seine zweite verriegelnde Position zusammen mit der Ausbildung/Kontur des Verriegelungselements und dessen schienenartiger Führung als Hebel, der das Verriegelungselement mit seinen Haken radial anhebt, wodurch die Haken in der zweiten verriegelnden Position unter radialem Druckkontakt mit der Stufung des zweiten Gehäuseteils den eingangs beschriebenen vorteilhaften Druckkontakt der beiden Gehäuseteile bereitstellen.

Bei dem vorstehend beschriebenen Verriegelungselement einer bevorzugten Ausführung der Verriegelungsmechanik kann das bügelförmige Verriegelungselement an den Enden seiner Schenkel geschlossen ausgebildet sein, so dass ein vorteilhaft zusammenhängender Fanghaken mit einem geschlossenen ösenförmigen, d. h. O-förmigen, Durchgang bereitgestellt ist.

Wie vorstehend beschrieben kann der Druckknopf einer Ausführung der Verriegelungsmechanik geeigneter Weise einen sich durch die Durchgangsöffnung des ersten Gehäuseteils erstreckenden zylindrischen Führungsbereich des Druckknopfstifts umfassen, an den in dem Inneren des Gehäuses ein sich verjüngender konischer Abschnitt anschließt.

Dabei ist der Druckknopf geeigneter Weise derart angeordnet und insbesondere in seinen Abmessungen derart ausgebildet, dass das Verriegelungselement in der ersten Position des Druckknopfs unter Einwirkung des in dem Kanal angeordneten Federelements unter radialem Druckkontakt mit dem konischen Abschnitt des Druckknopfs steht. Bei einer Verschiebung des Druckknopfs von der ersten zu der zweiten Position des Druckknopfs steht das Verriegelungselement aufgrund des den Druckknopf verschiebenden axialen Drucks mit seinem abgerundeten Bogen dann unter axialem und radialem Druckkontakt mit dem konischen Abschnitt des Druckknopfs. In der zweiten Position des Druckknopfs steht das Verriegelungselement geeigneter Weise lediglich unter radialem Druckkontakt mit dem zylindrischen Führungsbereich des Druckknopfstifts.

Zur Sicherstellung der Lage des Druckknopfs in seiner ersten und zweiten Position kann besonders vorteilhaft weiterhin eine Betätigungsvorrichtung mit einer axialen Fixierungsmechanik des Druckknopfs in der ersten und zweiten Position vorgesehen sein.

Dabei kann der Druckknopf nach einer vorteilhaften Ausführung der Erfindung ein Element einer Betätigungsvorrichtung der Verriegelungsmechanik sein, wobei die Betätigungsvorrichtung vorteilhaft eine Fixierungsmechanik des Druckknopfs umfassen kann, die eine Fixierung des Druckknopfs in seiner ersten und zweiten Position bereitstellt, wobei die Fixierung unter axialem Druck von außen auf die Betätigungsvorrichtung lösbar ist. Auf diese Weise ist sichergestellt, dass die erste entriegelnde und zweite verriegelnde Position der Gehäuseteile, die mit der ersten und zweiten fixierenden Position des Druckknopfs korrespondiert, nicht unbeabsichtigt gelöst wird.

Auf diese Weise kann eine Verriegelung und Entriegelung der beiden Gehäuseteile jeweils mittels axialem Druck von außen auf die Betätigungsvorrichtung ausgelöst werden, wonach eine Verriegelungsmechanik dieser Ausführung besonders einfach, komfortabel und intuitiv bedient werden kann.

Eine Ausführung einer vorstehend beschriebenen vorteilhaften Betätigungsvorrichtung zur Bereitstellung einer Fixierungsmechanik des Druckknopfs kann geeigneter Weise neben dem Druckknopf eine Vielzahl weitere koaxial mit dem Druckknopf in und/oder an der Durchgangsöffnung des ersten Gehäuseteils angeordnete und mit dem Druckknopf und/oder mit einer in der Durchgangsöffnung des ersten Gehäuseteils ausgebildeten Kontur und/oder miteinander zusammenwirkende Elemente mit einem Entriegelungsstift, einer Spiralfeder und einer Kegelfeder und mit wenigstens zwei Verriegelungskugeln umfassen. Die vorstehende mögliche Ausführung einer Betätigungsvorrichtung zur Bereitstellung einer Fixierungsmechanik des Druckknopfs ist detailliert in der ersten Druckknopfanmeldung und in der nachfolgenden Beschreibung unter Bezugnahme auf die Zeichnungen beschrieben.

Eine weitere Ausführung einer vorstehend beschriebenen vorteilhaften Betätigungsvorrichtung zur Bereitstellung einer Fixierungsmechanik des Druckknopfs kann geeigneter Weise neben dem Druckknopf eine koaxial mit dem Druckknopfstift des Druckknopfs angeordnete ringförmige, asymmetrische Spiralfeder umfassen, die in einer in der Durchgangsöffnung des ersten Gehäuseteils ausgebildeten Kontur angeordnet ist, und weiterhin eine Kegelfeder umfassen. Dabei sind an dem Druckknopfstift eine Kontur mit wenigstens einer Entriegelungsrille und/oder Verriegelungsrille und/oder Halterille ausgebildet, die mit der asymmetrischen Spiralfeder zusammenwirkt. Der Druckknopf der Betätigungsvorrichtung kann dabei weiterhin drehbar ausgebildet sein und auf diese Weise mit weiteren den Druckknopf in seiner Position und seine Betätigung sicherstellenden Elementen zusammenwirken. Die vorstehende mögliche Ausführung einer Betätigungsvorrichtung zur Bereitstellung einer Fixierungsmechanik des Druckknopfs ist detailliert in der zweiten Druckknopfanmeldung und in der nachfolgenden Beschreibung unter Bezugnahme auf die Zeichnungen beschrieben.

Ein Gehäuse eines Steckverbinders mit einem ersten und zweiten Gehäuseteil einer Ausführung der Erfindung umfasst wenigstens eine vorstehend beschriebene Ausführung einer Verriegelungsmechanik, wobei ein Druckknopf derart ausgebildet und angeordnet sein kann, dass ein betätigbarer Kopf des Druckknopfs in der ersten entriegelnden Position der beiden Gehäuseteile von einer äußeren Wand des ersten Gehäuseteils beabstandet ist und in der zweiten verriegelnden Position der Gehäuseteile im wesentlichen formschlüssig mit der äußeren Wand des ersten Gehäuseteils an der Durchgangsöffnung angeordnet ist. Auf diese Weise ist eine optische Rückmeldung des Verriegelungsstatus der Verbindungsmechanik verdeutlicht und eine einfach zu handhabende, komfortable und unmissverständliche Anordnung bereitgestellt. Geeigneter Weise kann das Gehäuse hierfür eine erste und zweite Verriegelungsmechanik umfassen, die an gegenüberliegenden Wänden des Gehäuses angeordnet sind, wobei das erste Gehäuseteil ein Gehäuseoberteil und das zweite Gehäuseteil ein Gehäuseunterteil des Steckverbinders sein kann.

Der Vollständigkeit halber sei erwähnt, dass die Verriegelungsmechanik besonders für einen verriegelbaren Steckverbinder geeignet ist, wobei das Steckverbindergehäuse in einer besonders bevorzugten Ausgestaltung zumindest einen im Steckverbindergehäuse fixierten Kontaktträger aufweist. In dem Kontaktträger, der auch als Isolierkörper bezeichnet wird, ist zumindest ein Kontakt angeordnet. Insbesondere handelt es sich dabei um einen elektrischen und/oder optischen und/oder pneumatischen Kontakt. Beispielsweise besitzt ein solcher Kontakt einen Steckbereich und einen Kabelanschlussbereich. Dieser Kabelanschlussbereich dient der Versorgung der Kontakte mit entsprechenden digitalen und/oder analogen Signalen und/oder mit Energie. Weiterhin kann im Steckverbindergehäuse zumindest eine Kabeleinführöffnung zur Einführung eines elektrischen und/oder optischen und/oder hydraulischen Kabels angeordnet sein.

Insbesondere kann der Steckverbinder Mittel zur Fixierung des eingeführten Kabels aufweisen, beispielsweise eine Kabelverschraubung. Steckseitig ist der Steckverbinder unter anderem durch eine entsprechende Stecköffnung und insbesondere durch ein entsprechendes sogenanntes "Steckgesicht" zum Stecken mit einem entsprechenden Gegensteckverbinder, z. B. zur Signal- und/oder Energieübertragung, vorgesehen. Der Steckverbinder kann auch einen separaten sogenannten "Halterrahmen" und/oder einen ähnlich wirkenden, in den Steckverbinder fest integrierten Haltemechanismus sowie mehrere darin angeordnete Isolierkörper in Form sogenannter "Steckverbindermodule" aufweisen. Weiterhin kann der Steckverbinder zumindest teilweise aus Metall bestehen und für hohe Stromstärken und/oder Spannungen ausgelegt sein, also z. B. Stromstärken über 50 Ampere, insbesondere größer als 100 Ampere, bevorzugt Stromstärken größer als 250 Ampere, insbesondere Stromstärken größer 500 Ampere. Alternativ oder ergänzend können Spannungen über 60 V, insbesondere über 220 V, beispielsweise über 600 V also auch Spannungen über 1000 V über einen solchen Steckverbinder übertragen werden. Zur Schutzerdung kann der Steckverbinder zumindest einen PE ("Protection Earth")-Kontakt beispielsweise in Form einer PE-Schraube aufweisen.

Bevorzugt handelt es sich bei dem Steckverbinder um einen Rechtecksteckverbinder. Das Steckverbindergehäuse kann somit zwei einander parallel gegenüberliegende Breitseiten und rechtwinklig dazu zwei einander parallel gegenüberliegende Schmalseiten aufweisen. Weiterhin kann das Steckverbindergehäuse zwei Durchgangsöffnungen besitzen, von denen bevorzugt jeweils eine in jeder der beiden Schmalseiten angeordnet ist. Der Steckverbinder kann weiterhin zwei Druckknöpfe mit der entsprechenden Fixierungsmechanik besitzen, wobei jeder der Druckknöpfe mit seiner Druckknopfachse und jeweils einer Fixierungsmechanik in jeweils einer der Durchgangsbohrungen angeordnet ist. Dies hat den Vorteil der vereinfachten Bedienung, da zur Verriegelung lediglich die beiden Druckknöpfe aufeinander zu bewegt werden müssen, d. h. sie können vom Benutzer vorteilhafterweise mit einer Hand zusammengedrückt werden. Auch lässt sich diese Art der Bedienung besonders vorteilhaft automatisieren, beispielsweise durch eine entsprechende elektromechanische Vorrichtung. Auf diese Weise kann beispielsweise auch ein "Ziehen unter Last" verhindert werden.

### Ausführungsbeispiel

Ausführungsbeispiele der Erfindung sind in den Zeichnungen dargestellt und werden im Folgenden näher erläutert. Es zeigen:
- Fig. 1a: eine schematische Darstellung eines grundlegenden Gedankens der Erfindung mit einem Schnitt durch eine Verriegelungsmechanik eines Gehäuses nach einer Ausführung der Erfindung in entriegelnder Position;
- Fig. 1b: den Betrieb der Verriegelungsmechanik von Fig. 1a von der entriegelnden Position von Fig. 1a in die verriegelnde Position von Fig. 1c;
- Fig. 1c: die Verriegelungsmechanik von Fig. 1a in verriegelnder Position;
- Fig. 2a: eine perspektivische Darstellung eines Verriegelungselements eines Gehäuses nach einer Ausführung der Erfindung;
- Fig. 2b: eine Abwandlung des Verriegelungselements von Fig. 2a;
- Fig. 2c und d: das Verriegelungselement von Fig. 2b jeweils aus weiteren Perspektiven;
- Fig. 2e: eine Seitenansicht des Verriegelungselements von Fig. 2b;
- Fig. 2f: einen Schnitt durch das Verriegelungselement von Fig. 2b entlang der Linie SL-SL von Fig. 2b;
- Fig. 3a: eine Explosionsdarstellung einer für eine Verriegelungsmechanik eineserfindungsgemäßen Gehäuses geeigneten Betätigungsvorrichtung mit einem Druckknopf und einem Entriegelungsstift und weiteren Elementen;
- Fig. 3b: einen Schnitt einer für die Betätigungsvorrichtung von Fig. 3a geeigneten Durchgangsöffnung eines Gehäuseteils;
- Fig. 3c: einen Schnitt durch den Druckknopf von Fig. 3a;
- Fig. 3d: eine vergrößerte Darstellung des Entriegelungsstifts von Fig. 3a;
- Fig. 4a: einen Schnitt durch eine Verriegelungsmechanik eines Gehäuses nach einer Ausführung der Erfindung mit dem Verriegelungselement von Fig. 2b und der Betätigungsvorrichtung von Fig. 3a in entriegelnder Position;
- Fig. 4b: die Verriegelungsmechanik von Fig. 4a in verriegelnder Position;
- Fig. 5a: einen Zustand des Betriebs der Verriegelungsmechanik von Fig. 4a;
- Fig. 5b: einen weiteren Zustand des Betriebs der Verriegelungsmechanik von Fig. 4a;
- Fig. 6a: eine dem Stand der Technik entsprechende, asymmetrische, ringförmig ausgeführte Spiralfeder;
- Fig. 6b und c: die Spiralfeder von Fig. 6a in zwei weiteren verschiedenen Ansichten;
- Fig. 6d: eine dem Stand der Technik entsprechende ver- und entriegelnde Anwendung der Spiralfeder von Fig. 6a bis c;
- Fig. 7a: eine Explosionsdarstellung einer für eine Verriegelungsmechanik eines erfindungsgemäßen Gehäuses geeigneten Betätigungsvorrichtung mit einem Druckknopf und der Spiralfeder von Fig. 6a bis c und weiteren Elementen;
- Fig. 7b und c: eine Kegelfeder der Betätigungsvorrichtung von Fig. 7a;
- Fig. 7d: eine vergrößerte Darstellung des Druckknopfs von Fig. 7a;
- Fig. 7e: einen Schnitt einer für die Betätigungsvorrichtung von Fig. 7a geeigneten Durchgangsöffnung eines Gehäuseteils;
- Fig. 8a bis f: den Vorgang der Verriegelung und Entriegelung einer Verriegelungsmechanik eines erfindungsgemäßen Gehäuses im Schnitt durch die Betätigungsvorrichtung von Fig. 7a;
- Fig. 9a und: b eine Draufsicht auf den Kopf des Druckknopfs von Fig. 7a und b;
- Fig. 10a: ein Gehäuse mit einer Verriegelungsmechanik nach einer Ausführung der Erfindung in entriegelnder Position; und
- Fig. 10b: das Gehäuse von Fig. 10a in verriegelnder Position.

Die Figuren enthalten teilweise vereinfachte, schematische Darstellungen. Zum Teil werden für gleiche, aber gegebenenfalls nicht identische Elemente identische Bezugszeichen verwendet. Verschiedene Ansichten gleicher Elemente könnten unterschiedlich skaliert sein.

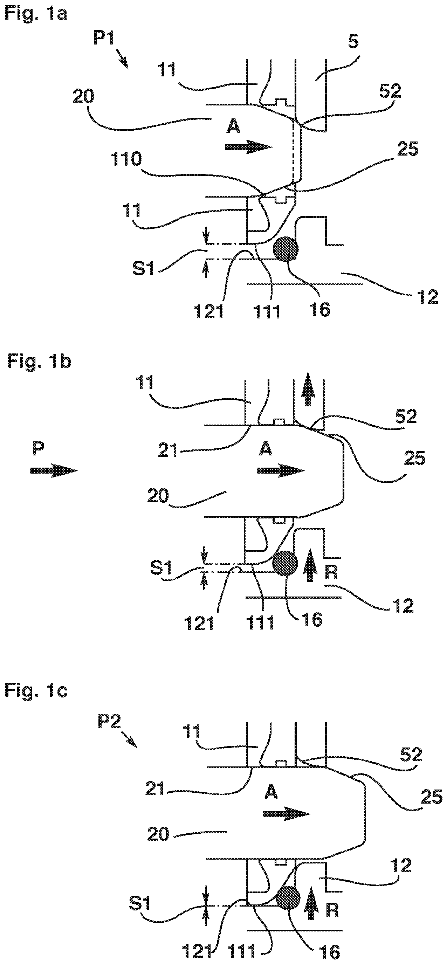

Die Zusammenschau von Figur 1a, 1b und 1c zeigt eine schematische Darstellung eines grundlegenden Gedankens der Erfindung mit einem Schnitt durch eine Verriegelungsmechanik eines Gehäuses nach einer Ausführung der

Erfindung in Figur 1a in einer ersten entriegelnden Position P1 und in Figur 1b den Betrieb der Verriegelungsmechanik von Figur 1a von der entriegelnden Position P1 von Figur 1a in die verriegelnde Position P2 von Figur 1c.

Ein sich durch eine Durchgangsöffnung 110 eines auf einem zweiten Gehäuseteil 12 angeordneten ersten Gehäuseteils 11 erstreckender Abschnitt eines axialen A länglichen Druckknopfs 20 ragt in Figur 1a in der entriegelnden Position P1 um einen vorbestimmten Betrag in das Innere des aus den beiden Gehäuseteilen 11, 12 zusammengesetzten Gehäuses hinein. Dabei ist in Figur 1a eine besonders einfache Ausführung, bei der ein im Inneren des Gehäuses angeordnetes Verriegelungselement 5 einstückig mit einem zweiten Gehäuseteil 12 ist, in Zusammenschau mit einer bevorzugten Ausführung eines individuellen Verriegelungselements 5 dargestellt.

Bei der einfachen Ausführung kann das Verriegelungselement 5 ein oberer Rand einer Öse sein, deren weiterer Verlauf und deren Verbindung mit dem zweiten Gehäuseteil 12 der Einfachheit und Übersichtlichkeit halber nicht dargestellt ist. Der Unterschied der einfachen einstückigen Ausführung ist durch die unterschiedliche Position des Endes des Druckknopfs 20 verdeutlicht, das für die einfache, einstückige Ausführung gestrichelt dargestellt ist und für die Ausführung mit dem individuellen Verriegelungselement 5 durchgezogen dargestellt ist.

Bei der einfachen einstückigen Ausführung ist das Ende des Druckknopfs 20 in der entriegelnden Position P1 von Figur 1a an einer Position, die eine Trennung der beiden Gehäuseteile 11, 12 nicht beeinträchtigt, während bei der Ausführung mit dem individuellem Verriegelungselement 5 das Ende des Druckknopfs 20 sich um einen vorbestimmten Betrag in das Gehäuse erstreckt, so dass das Verriegelungselement 5 Kontakt mit dem Druckknopf 20 hat und von ihm gestützt wird.

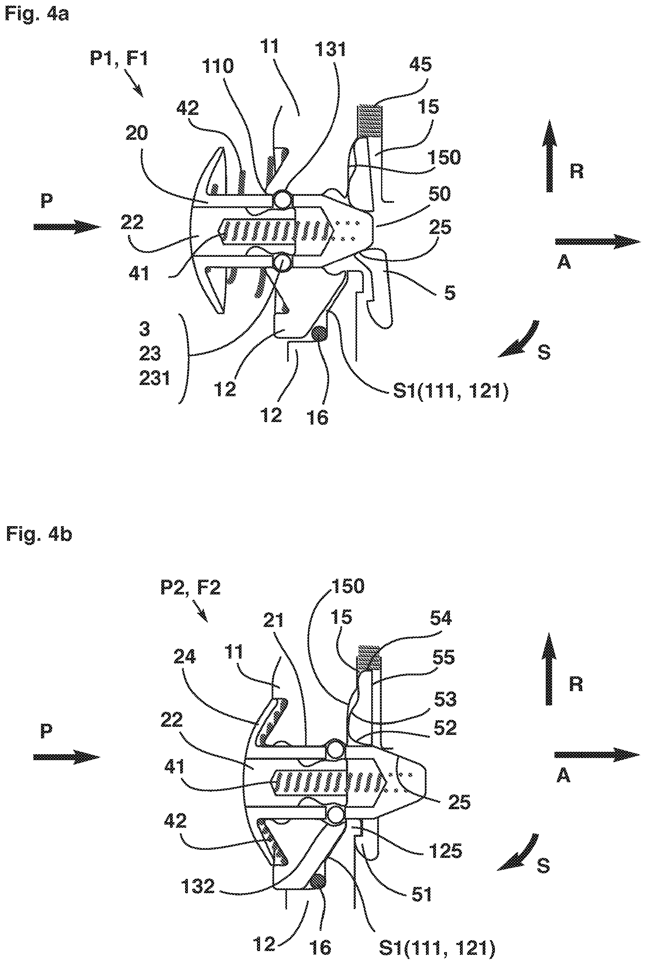

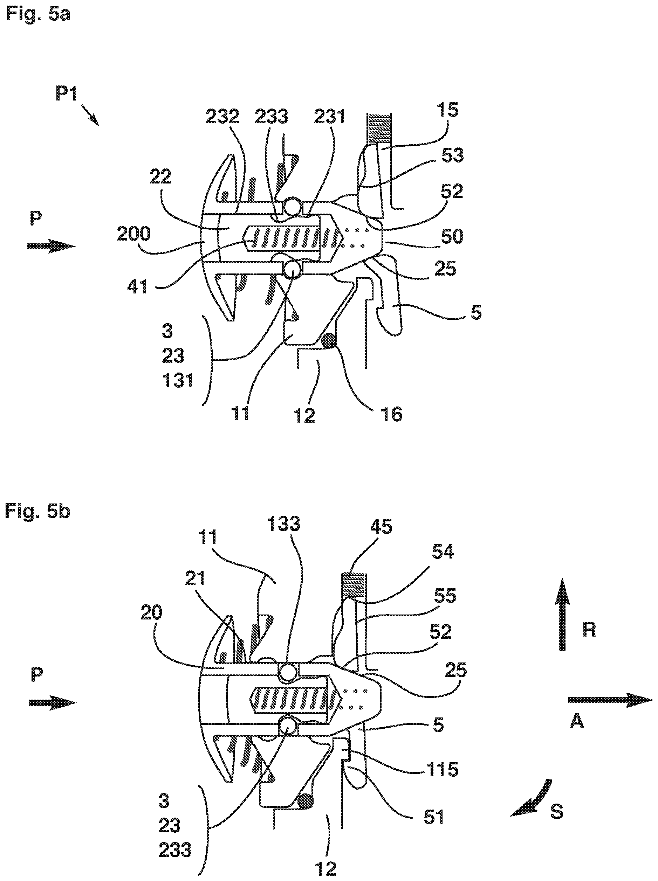

Ansonsten unterscheiden sich die einfache einstückige Ausführung und die Ausführung mit dem individuellem Verriegelungselement 5 in der stark schematischen Zeichnung von Figur 1a, b und c nicht. Ein individuell ausgebildetes Verriegelungselement 5 kann auf in der Zeichnung nicht dargestellte Weise in dem ersten Gehäuseteil 11 gelagert und geführt sein und dann mit dem zweiten Gehäuseteil 12 beispielsweise verhaken oder auf andere Weise zusammenwirken. Ein Beispiel einer bevorzugten Ausführung eines individuell ausgebildeten Verriegelungselements 5 wird nachfolgend unter Bezugnahme auf Figur 4 und 5 beschrieben.

In einem Spalt S1 zwischen dem benachbarten Rand 111 und 121 der in ihrer entriegelnden Position P1 zusammengesetzten Gehäuseteile 11, 12 ist ein Dichtelement 16 angeordnet.

Der sich durch die Durchgangsöffnung 110 des ersten Gehäuseteils 11 erstreckende längliche Druckknopf 20 hat einen im Wesentlichen zylindrisch ausgebildeten Druckknopfstift 21, der sich mit einem zylindrischen Führungsbereich durch die Durchgangsöffnung 110 erstreckt, und an den sich im Inneren des Gehäuses ein sich konisch verjüngender Abschnitt 25 anschließt. Der zylindrische Führungsbereich des Druckknopfstifts 21 korrespondiert mit den Abmessungen der Durchgangsöffnung 110 und dient zur Kraftaufnahme für die Hebelwirkung des unter einem axialem A Druck P in das Innere des Gehäuses verschiebbaren Druckknopfs 20, dessen konischer Abschnitt 25 mit einer abgeschrägten und/oder abgerundeten Kontur 52 bzw. Abrundung oder Abschrägung 52 des Verriegelungselements 5 derart zusammenwirkt, dass die beiden Gehäuseteile 11, 12 unter einem radialem Druck R zueinander verschoben werden. Dabei stehen der Druckknopf 20 und das Verriegelungselement 5 unter einem radialem R und axialem A Druckkontakt. Dieser Zustand der Bereitstellung einer Verriegelung der beiden Gehäuseteile 11, 12 ist in Figur 1b dargestellt.

Figur 1c zeigt die Verriegelungsmechanik von Figur 1a und b in verriegelnder Position P2, in der der Druckknopf 20 in seiner statischen zweiten Position in das Innere des Gehäuses hineinragt, so dass das Verriegelungselement 5 anders als bei der axialen A Verschiebung des Druckknopfs 20 unter lediglich radialem R Druckkontakt mit dem zylindrischen Führungsbereich des Druckknopfstifts 21 steht. Außerdem ist in der verriegelnden Position P2 der beiden Gehäuseteile 11, 12 der Spalt S1 zwischen den beiden Gehäuseteilen 11, 12 minimiert und mittels dem Dichtelement 16 eine Dichtung der Gehäuseteile 11, 12 bereitgestellt. Dabei ist ein wünschenswerter radialer R Druckkontakt zwischen dem ersten 11 und zweiten 12 Gehäuseteil und dem Dichtelement 16 bereitgestellt.

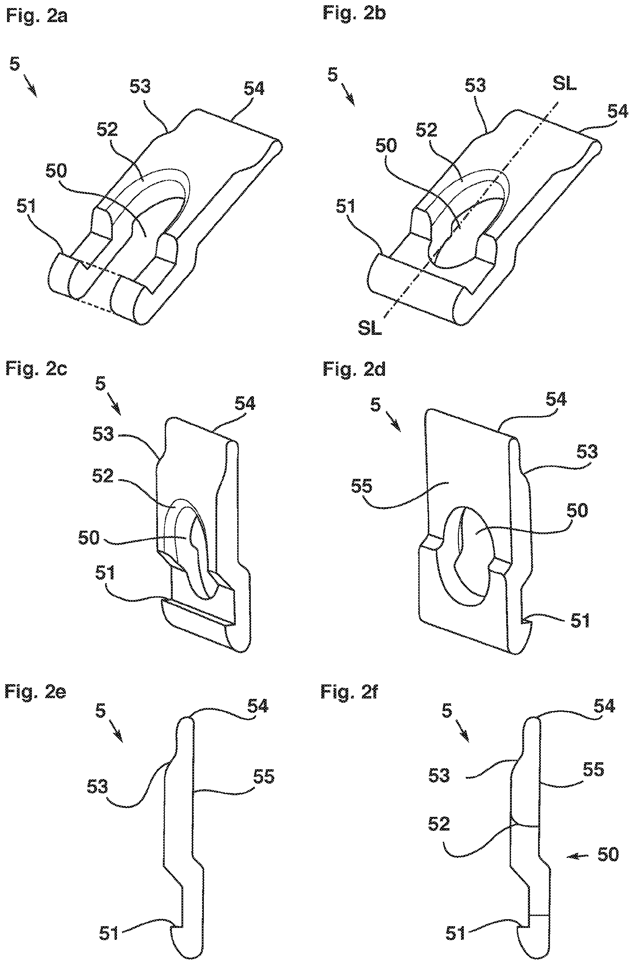

Figur 2a zeigt eine perspektivische Darstellung eines Verriegelungselements 5 eines Gehäuses nach einer Ausführung der Erfindung. Das flache, im Wesentlichen sich in einer Ebene erstreckende U-förmig in Form eines Bügels ausgebildete Verriegelungselement 5 hat eine längliche abgerundete Schulter 54, von der ausgehend sich zwei parallele Schenkel erstrecken, an deren Enden jeweils ein Haken 51 ausgebildet ist. Die beiden Schenkel bilden einen abgerundeten Bogen 52, so dass ein Durchgang 50 bereitgestellt ist, wonach der Bogen 52 des auf diese Weise symmetrisch ausgebildeten Verriegelungselements 5 zur Aufhängung des Verriegelungselements 5 geeignet ist. Die Dicke des Verriegelungselements 5 nimmt von seinem Bogen 52 zu seiner Schulter 54 hin über eine Abschrägung 53 ab.

Figur 2b zeigt eine Abwandlung des Verriegelungselements 5 von Figur 2a, bei der das bügelförmige Verriegelungselements 5 an den Enden seiner Schenkel geschlossen ist, so dass ein zusammenhängender Haken 51 bereitgestellt ist, wonach das Verriegelungselement 5 von Figur 2a mit dem Durchgang 50 ösenförmig ausgebildet ist.

Figur 2c und d zeigen zur weiteren Verdeutlichung und Veranschaulichung das Verriegelungselement 5 von Figur 2b jeweils aus weiteren Perspektiven, und Figur 2e und f zeigen jeweils eine Seitenansicht sowie einen Schnitt durch das Verriegelungselement 5 von Figur 2b entlang der Linie SL-SL von Figur 2b, wonach das Verriegelungselement 5 an seiner dem abgerundeten Bogen 52 und der Abschrägung 53 gegenüberliegenden Seite eine flache Ebene 55 aufweist.

Das im Wesentlichen in einer Ebene ausgebildete bügelförmige Verriegelungselement 5 mit der länglichen Schulter 54, dem/den Haken 51 und dem Durchgang 50 ist mit der Kontur seines abgerundeten Bogens 52, der Abschrägung 53 und der abgerundeten Schulter 54 und mit der auf der gegenüberliegenden Seite des Bogens 52 und der Abschrägung 53 ausgebildeten flachen Ebene 55 besonders geeignet, in einem in dem ersten Gehäuseteil 11 ausgebildeten Kanal 15 beherbergt zu werden, der außerdem ein radiales R Federelement 45 beherbergt und in seinem Verlauf von der Schulter 54 zu dem Bogen 52 eine Erweiterung 150 aufweist. Eine detaillierte Beschreibung der Zusammenwirkung der Kontur des Kanals 15 mit seiner Erweiterung 150 mit der Kontur des Bogens 52 mit der Abschrägung 53 zu der abgerundeten Schulter 54 einer Ausführung der Erfindung folgt unter Bezugnahme auf Figur 4 und 5.

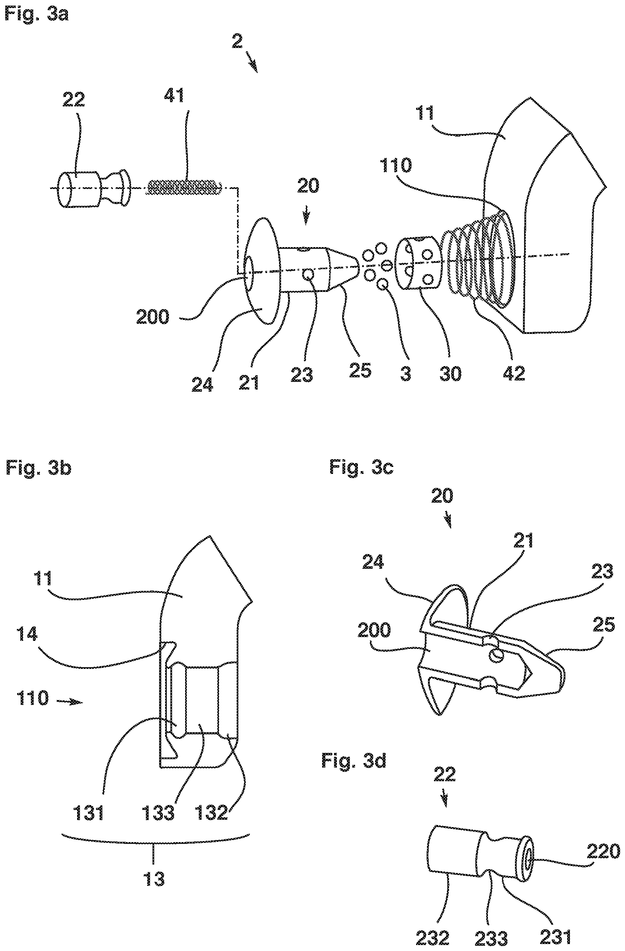

Figur 3a zeigt in einer perspektivischen Explosionsdarstellung eine Ausführung einer für eine Verriegelungsmechanik eines erfindungsgemäßen Gehäuses geeigneten Betätigungsvorrichtung 2. Die Betätigungsvorrichtung 2 ist geeignet für ihre Anordnung in einer Durchgangsöffnung 110 des ersten Gehäuseteils 11 und umfasst eine Fixierungsmechanik des Druckknopfs 20, die eine unter axialem A Druck P auf die Betätigungsvorrichtung 2 lösbare Fixierung des Druckknopfs 20 in einer ersten F1 und zweiten F2 Position bereitstellt, die jeweils mit der ersten entriegelnden Position P1 und der zweiten verriegelnden Position P2 korrespondiert, und deren Funktionsweise nachfolgend unter Bezugnahme auf Figur 4 und 5 beschrieben wird. Die Betätigungsvorrichtung 2 der Ausführung von Figur 3a entspricht außerdem der in der "ersten Druckknopfanmeldung" detailliert beschriebenen Druckknopfverriegelung.

Figur 3b zeigt einen Schnitt durch das Gehäuseteil 11 mit der Durchgangsöffnung 110 von Figur 3a, Figur 3c zeigt einen Schnitt durch den Druckknopf 20 von Figur 3a und Figur 3d zeigt eine vergrößerte Darstellung des Entriegelungsstifts 22 von Figur 3a.

Die Betätigungsvorrichtung 2 zur Bereitstellung der Fixierungsmechanik des Druckknopfs 20 umfasst neben dem Druckknopf 20 den Entriegelungsstift 22, eine Spiralfeder 41, eine Kegelfeder 42, beispielsweise fünf Verriegelungskugeln 3 und einen Kugelkäfig 30, die montiert koaxial zusammen mit dem Druckknopf 20 in und/oder an der Durchgangsöffnung 110 des Gehäuseteils 11 angeordnet sind.

Der Druckknopf 20 umfasst einen im Wesentlichen zylindrisch ausgebildeten Druckknopfstift 21 mit einem zylindrischen Führungsbereich, an dessen einem Ende ein Kopf 24 zur Betätigung der Betätigungsvorrichtung 2 mittels dem Druckknopf 20 angeordnet ist und an dessen anderem Ende ein sich konisch verjüngender Abschnitt 25 anschließt. In dem zylindrischen Führungsbereich des Druckknopfstifts 21 sind Bohrungen 23 zur Aufnahme der Verriegelungskugeln 3 ausgebildet und außerdem eine zentrale axiale Öffnung 200 zur Beherbergung des Entriegelungsstifts 22 und der Spiralfeder 41 ausgebildet.

Der im Wesentlichen zylindrisch ausgebildete Entriegelungsstift 22 umfasst einen zylindrischen Abschnitt 232, an den eine Entriegelungsausnehmung 233 und eine Rückstellabschrägung 231 mit einem Haltebereich für die Verriegelungskugeln 3 anschließt, und eine zentrale axiale Aufnahmeausnehmung 220 für die Spiralfeder 41. Die Rückstellabschrägung 231 weist dabei an ihrem Ende einen Haltebereich auf, der ebenfalls zur Aufnahme der Verriegelungskugeln 3 geeignet ist.

Die in der Aufnahmeausnehmung 220 des Entriegelungsstifts 22 angeordnete Spiralfeder 41 wird bei der Montage der Betätigungsvorrichtung 2 zusammen mit dem Entriegelungsstift 22 in der Öffnung 200 des Druckknopfs 20 derart angeordnet, dass die Spiralfeder 41 einen axialen A Druck auf den Entriegelungsstift 22 in Richtung des Kopfs 24 des Druckknopfs 20 ausübt. Es ist klar, dass dort ein nicht dargestellter Anschlag für den Entriegelungsstift 22 vorgesehen sein kann oder andere Maßnahmen vorgesehen sein können, die den Entriegelungsstift 22 daran hindern, aus dem Druckknopf 20 herausgedrückt zu werden.

Die Verriegelungskugeln 3 sind in den Bohrungen 23 des Druckknopfs 20 beherbergt und können von dem mit Bohrungen mit entsprechend kleinerem Durchschnitt versehenen ringförmigen Kugelkäfig 30, der entsprechend auf dem Druckknopf 20 angeordnet ist, in dem Druckknopf 20 gehalten werden. An Stelle des Kugelkäfigs 30 können die Verriegelungskugeln 3 auch nach ihrem Einsatz in die Bohrungen 23 verprägt und auf diese Weise in den Bohrungen 23 vor Herausfallen geschützt sein.

Der wie vorstehend beschrieben mit dem Entriegelungsstift 22, der Spiralfeder 41 und den Verriegelungskugeln 3 versehene Druckknopf 20 ist zusammen mit der Kegelfeder 42 an und/oder in der nachstehend beschriebenen Durchgangsöffnung 110 angeordnet, wobei die Kegelfeder 42 in einer Aufnahme 14 an dem äußeren Rand des Gehäuseteils 11 und außerdem an dem Kopf 24 des Druckknopfs 20 angeordnet ist, so dass mittels der Kegelfeder 42 eine axiale A nach außen gerichtete Druckkraft auf den Druckknopf 20 ausgeübt wird.

Die Durchgangsöffnung 110 umfasst an dem äußeren Rand des Gehäuseteils 11 die Aufnahme 14 für die Kegelfeder 42 und in ihrem sich in das Innere des Gehäuseteils 11 erstreckenden Verlauf eine Kontur 13 mit einer ersten fixierenden Ausnehmung 131, einem Führungsbereich 133 und einer zweiten fixierende Ausnehmung 132. Die erste 131 und zweite 132 fixierende Ausnehmung kann jeweils in den Bohrungen 23 des Druckknopfs 20 angeordnete Verriegelungskugeln 3 beherbergen, wobei die jeweilige Beherbergung der Verriegelungskugeln 3 in der ersten 131 und zweiten 132 fixierenden Ausnehmung jeweils mit einer ersten F1 und zweiten F2 fixierenden axialen A Position des Druckknopfs 20 in der Durchgangsöffnung 110 korrespondiert, was nachfolgend unter Bezugnahme auf Figur 4 und 5 beschrieben wird.

Figur 4a zeigt einen Schnitt durch eine Verriegelungsmechanik eines Gehäuses nach einer Ausführung der Erfindung mit dem Verriegelungselement 5 von Figur 2b und der Betätigungsvorrichtung 2 von Figur 3a in der ersten entriegelnden Position P1, der beiden Gehäuseteile 11, 12, die mit einer ersten fixierenden Position F1 des Druckknopfs 20 der Betätigungsvorrichtung 2 korrespondiert, und Figur 4b zeigt die Verriegelungsmechanik von Figur 4a in einer zweiten verriegelnden Position P2, der beiden Gehäuseteile 11, 12, die mit einer zweiten fixierenden Position F2 des Druckknopfs 20 der Betätigungsvorrichtung 2 korrespondiert.

Der Druckknopf 20 ist in der ersten fixierenden Position F1 von Figur 4a in der Durchgangsöffnung 110 des ersten Gehäuseteils 11 angeordnet, sein Kopf 24 ist durch den axialen Druck der Kegelfeder 42 von der äußeren Wand des ersten Gehäuseteils 11 beabstandet und die Verriegelungskugeln 3 sind in der Verriegelungsöffnung 23 des Druckknopfs 20 durch den von der Kegelfeder 42 in Richtung des Kopfs 24 gedrückten Entriegelungsstift 22 mittels dem Haltebereich der Rückstellabschrägung 231 radial R in die erste fixierende Ausnehmung 131 der Kontur 13 der Durchgangsöffnung 110 gedrückt, so dass der Druckknopf 20 in dieser ersten fixierenden Position F1 gehalten ist.

Der Druckknopfstift 21 des Druckknopfs 20 erstreckt sich in das Innere des ersten Gehäuseteils 11, in dem der Kanal 15 mit der Erweiterung 150 ausgebildet ist. In dem Kanal 15 ist ein als Spiralfeder ausgebildetes Federelement 45 und die Schulter 54 des Verriegelungselements 5 angeordnet, wobei das Federelement 45 einen radialen R Druck auf das Verriegelungselement 5 ausübt.

Der sich konisch verjüngende Abschnitt 25 des Druckknopfs 20 ragt mit einem vorbestimmten Betrag in das Innere des ersten Gehäuseteils 11 und erstreckt sich in den Durchgang 50 des Verriegelungselements 5, wobei der konische Abschnitt 25 des fixierten Druckknopfs 20 unter radialem R Druckkontakt mit dem Bogen 52 des Verriegelungselements 5 steht und das Verriegelungselement 5 auf diese Weise ortsfest von dem Druckknopf 20 an seiner Position in dem ersten Gehäuseteil 11 gehalten und beherbergt ist.

Der Haken 51 des Verriegelungselements 5 ist von einer an dem zweiten Gehäuseteil 12 ausgebildeten Stufung 125 beabstandet, so dass das erste Gehäuseteil 11 von dem zweiten Gehäuseteil 12 entfernt werden kann, wobei die vollständige Verriegelungsmechanik mit der Betätigungsvorrichtung 2 und dem Verriegelungselement 5 in dem ersten Gehäuseteil 11 verbleibt. In dem Spalt S1 zwischen den benachbarten Rändern 111 und 121 der beiden Gehäuseteile 11, 12 ist ein Dichtelement 16 vorgesehen.

Der Druckknopf 20 ist in der zweiten fixierenden Position F2 von Figur 4b ebenfalls in der Durchgangsöffnung 110 des ersten Gehäuseteils 11 angeordnet, und zusammen mit dem Entriegelungsstift 22 unter Einwirkung eines äußeren axialen A Drucks P in das Innere des ersten Gehäuseteils 11 bereits verschoben worden. Dabei ist die Spiralfeder 42 durch den axialen A Druck P komprimiert und der Kopf 24 des Druckknopfs 20 im wesentlichen formschlüssig mit der äußeren Wand des ersten Gehäuseteils an der Durchgangsöffnung 110 angeordnet. Obwohl die komprimierte Kegelfeder 42 den Kopf 24 axial A nach außen drückt verbleibt der Druckknopf 20 dennoch in seiner zweiten fixierenden Position F2, nachdem die in der zweiten fixierenden Ausnehmung 132 angeordneten Verriegelungskugeln 3 den Druckknopf 20 in dieser axialen A Position F2 halten.

Der konische Abschnitt 25 des Druckknopfs 20 erstreckt sich durch den Durchgang 50 des Verriegelungselements 5, dessen Bogen 52 auf dem zylindrischen Führungsbereich des Druckknopfstifts 21 anliegt. Dabei ist das Verriegelungselement 5 gegen den Druck des Federelements 45 mit seiner Schulter 54 in den Kanal 15 geschoben, wonach der Bogen 52 unter radialem R Druckkontakt mit dem zylindrischen Führungsbereich des Druckknopfstifts 21 steht.

Das Verriegelungselement 5 hat bei seiner Verlagerung von der ersten entriegelnden Position P1 in die zweite verriegelnde Position P2 unter Einwirkung eines äußeren axialen A Drucks P auf den Druckknopf 20 aufgrund des Zusammenwirkens des Kanals 15 und seiner Erweiterung 150 mit der abgerundeten Schulter 54 und der Abschrägung 53 des Verriegelungselements 5, sowie aufgrund des Zusammenwirkens des konischen Abschnitts 25 des Druckknopfs 20 mit dem abgerundeten Bogen 52 des Verriegelungselements 5 eine Schwenkbewegung S durchgeführt, wonach der Haken 51 des Verriegelungselements 5 in der zweiten verriegelnden Position P2 derart mit der Stufung 125 des zweiten Gehäuseteils 12 zusammenwirkt, dass ein radialer R Druckkontakt zwischen den beiden Gehäuseteilen 11, 12 und/oder dem Dichtelement 16 bereitgestellt ist. Dabei ist außerdem ein axialer A Druckkontakt des Verriegelungselements 5 mit dem zweiten Gehäuseteil 12 bereitgestellt und der Spalt zwischen dem benachbarten Rand 111, 121 der Gehäuseteile 11, 12 minimiert.

Bei der vorstehenden Schwenkbewegung S stellt der Kanal 15 mit seiner Erweiterung 150 eine schienenartige Führung für das Verriegelungselement 5 bereit.

Figur 5a zeigt einen Zustand des Betriebs der Verriegelungsmechanik von Figur 4a und b, und Figur 5b zeigt einen weiteren Zustand des Betriebs der Verriegelungsmechanik von Figur 4a und b.

Die axiale A Position des Druckknopfs 20 von Figur 5 entspricht der axialen A Position des Druckknopfs 20 von Figur 4a, weshalb bezüglich dessen Anordnung und der Anordnung des Verriegelungselements 5 auf die vorstehende Beschreibung von Figur 4a verwiesen wird. Anders als bei der ersten fixierenden Position F1 des Druckknopfs 20 ist der Entriegelungsstift 22 unter Einwirkung eines äußeren axialen A Drucks P entgegen dem Druck der Spiralfeder 41 in der Öffnung 200 des Druckknopfs derart verschoben, dass die Verriegelungskugeln 3 gerade noch in der ersten fixierenden Ausnehmung 131 der Kontur 13 angeordnet sind.

In einem unter weiterer Einwirkung eines axialen A Drucks P auf den Entriegelungsstift 22 und den Druckknopf 20 entgegen den Druck der Federn 41 und 42 an den vorstehend beschriebenen Betriebszustand anschließenden Zustand von Figur 5b sind der Entriegelungsstift 22 und der Druckknopf 20 weiter in das Innere der Durchgangsöffnung 110 verschoben. Dabei gestatten die von dem Entriegelungsstift 22 freigesetzten und von dessen Entriegelungsausnehmung 233 aufgenommenen Verriegelungskugeln 3 eine Verschiebung des Druckknopfstifts 21 des Druckknopfs 20 mit seinem zylindrischen Führungsbereich entlang des Führungsbereichs 133 der Durchgangsöffnung 110. Dabei setzt die vorstehend beschriebene Schwenkbewegung S des Verriegelungselements 5 ein, das mit seinen Konturen jeweils mit den Konturen des Kanals 15 und dem zylindrischen Abschnitt 25 des Druckknopfs 20 zusammenwirkt, wobei nach einer weiteren axialen A Verschiebung des Druckknopfs 20 die zweite fixierende Position F2 des Druckknopfs 20 sowie die zweite verriegelnde Position P2 der beiden Gehäuseteile 11, 12 von Figur 4b bereitgestellt ist.

Auf analoge Weise wird der Druckknopf 20 unter Einwirkung eines axialen A Drucks auf den Entriegelungsstift 22 zur Freisetzung der Verriegelungskugeln 3 aus ihrer zweiten fixierenden Ausnehmung 132 entriegelt, so dass die erste entriegelnde Position P1 der Gehäuseteile 11, 12 mit der ersten fixierenden Position F1 des Druckknopfs 20 ermöglicht ist und mittels dem axialem Druck der Federn 41 und 42 bereitgestellt wird.

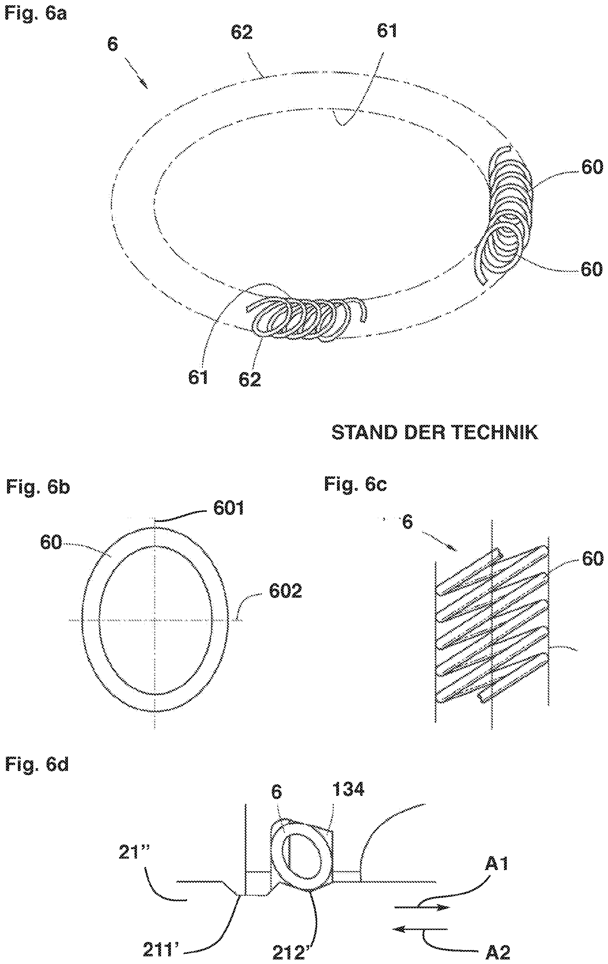

Die Figur 6a bis c zeigen eine dem Stand der Technik entsprechende, asymmetrische, ringförmig ausgeführte Spiralfeder 6. In der Figur 6a ist die Spiralfeder 6 in ihrer tatsächlichen Form nur abschnittsweise gezeigt; tatsächlich verläuft sie jedoch in Form eines geschlossenen Ringes, der in der Zeichnung mittels einer gestrichelt-gepunkteten Linie angedeutet ist. Die einzelnen Spiralen 60 besitzen jeweils eine ovale Form mit einer großen Achse 601 und einer kleinen Achse 602, die in der Figur 6b dargestellt und bezeichnet sind. Die Figur 6c zeigt die Spiralfeder 6 in einer Seitenansicht. Dabei ist eine starke Schrägstellung gegenüber der Ringebene gut zu erkennen.

Die Figur 6d zeigt eine dem Stand der Technik entsprechende ver- und entriegelnde Anwendung einer solchen Spiralfeder 6.

Ein darin zumindest abschnittsweise dargestellter mechanischer Verbinder besitzt einen in einer Durchgangsöffnung 110' eines Gehäuseteils 11 angeordneten Druckknopfstift 21". Die Durchgangsöffnung 110' besitzt eine Gehäusenut 134 mit der darin angeordneten asymmetrischen Spiralfeder 6. Der Druckknopfstift 21" besitzt zwei Rillen, nämlich eine Verriegelungsrille 212' und eine Entriegelungsrille 211'. Die Spiralfeder 6 ist durch die Gehäusenut 134 und die Verriegelungsrille 212' in einer Verriegelungsausrichtung gehalten, d. h. ihre große Achse 601 ist in der Zeichnung linksgeneigt. Die Entriegelungsrille 211' des Druckknopfstifts 21" dient dazu, die verkantete Spiralfeder 6 in einem zweiten Umdrehungswinkel aufzunehmen, wenn der Druckknopfstift 21" tiefer in das Gehäuseteil 11 in einer ersten Bewegungsrichtung A1 eingeführt wird.

Grundsätzlich kann die Spiralfeder 6 zumindest zwei Ausrichtungen einnehmen. In ihrer Verriegelungsausrichtung ist ein Einführen des Druckknopfstifts 21" in das Gehäuseteil 11 in der ersten Bewegungsrichtung A1 ermöglicht. Gleichzeitig verhindert die Spiralfeder 6 in dieser Verriegelungsausrichtung eine Entnahme des Druckknopfstifts 21" entgegen der Einführrichtung aus dem Gehäuse 11'. Mit anderen Worten ist eine Bewegung des Druckknopfstifts 21" in einer zweiten Bewegungsrichtung A2, verhindert, wobei die zweite Bewegungsrichtung A2 der ersten Bewegungsrichtung A1 entgegengesetzt ist.

Im Gegensatz dazu ist in einer Entriegelungsausrichtung der Spiralfeder 6 die Entnahme des Druckknopfstifts 21" aus dem Gehäuseteil 11 entgegen der Einführrichtung, also in der zweiten Bewegungsrichtung A2, erlaubt. Gleichzeitig ist ein tieferes Einstecken in der ersten Bewegungsrichtung A1 verhindert.

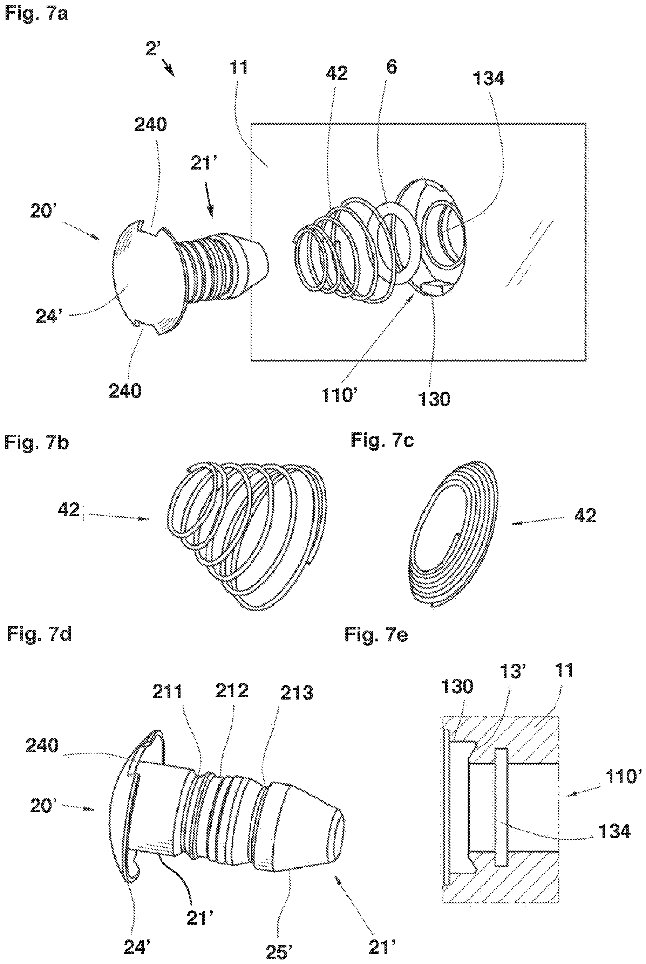

Figur 7a zeigt in einer perspektivischen Explosionsdarstellung eine Ausführung einer für eine Verriegelungsmechanik eines erfindungsgemäßen Gehäuses geeigneten Betätigungsvorrichtung 2'. Für diese Betätigungsvorrichtung 2' besitzt das teilweise gezeigte Gehäuseteil 11 eine Durchgangsöffnung 110'. Weiterhin besitzt die Betätigungsvorrichtung 2' eine Fixierungsmechanik zur Fixierung eines Druckknopfs 20' in einer ersten entriegelnden bzw. fixierenden Position F1, P1 und einer zweiten verriegelnden bzw. fixierenden Position F2, P2 mit einer asymmetrischen Spiralfeder 6, die hier nur schematisch dargestellt ist, ein weiteres Federelement, bei dem es sich um eine Kegelfeder 42 handelt, und einen Druckknopfstift 21'.

Die Figur 7b und 7c zeigen die Kegelfeder 42 in entspanntem und in komprimiertem Zustand. Die Kegelfeder 42 dient dazu, auf den eingeführten Druckknopf 20' eine entsprechende Rückstellkraft auszuüben, um ihn gegebenenfalls zur Entriegelung wieder aus dem Gehäuseteil 11 herauszudrücken.

Die Figur 7d zeigt den Druckknopf 20' detailliert. Der Druckknopf 20' besitzt an einem Ende einen im Wesentlichen tellerförmigen Druckknopfkopf 24'. Dem Druckknopfkopf 24' gegenüberliegend besitzt der Druckknopf 20' ein freistehendes Ende, das einen konischen Verlauf 25' aufweist. An dem Rand des Druckknopfs 24' sind einander gegenüberliegend zwei Polarisationsausnehmungen 240 angeordnet. An den Druckknopfkopf 24' schließt sich der im Wesentlichen zylindrisch ausgebildete Druckknopfstift 21' an. An dem Druckknopfstift 21' sind jeweils umlaufend eine Entriegelungsrille 211, eine Verriegelungsrille 212 und eine Halterille 213 angeordnet. Die Entriegelungsrille 211 und die Halterille 213 sind jeweils tiefer als die Verriegelungsrille 212.

Die Figur 7e zeigt die Durchgangsöffnung 110', die in dem Gehäuseteil 11 ausgebildet ist. Darin sind einander gegenüberliegend zwei Polarisationszapfen 130 zum Zusammenwirken mit dem Druckknopfkopf 24', insbesondere mit den darin angeordneten Polarisationsausnehmungen 240, angeordnet.

Durch die Polarisationszapfen 130 kann der montierte Druckknopf 20', ausgehend von seiner entriegelnden Halteposition, zunächst nur um eine erste Wegstrecke in das Gehäuseteil 11 eingesteckt werden, bis nämlich sein Druckknopfkopf 24' gegen die Polarisationszapfen 130 anschlägt. In diesem Zustand befindet sich der Druckknopf 20' gegenüber dem Gehäuseteil 11 in seiner Verriegelungsposition und zudem in seiner Verriegelungsstellung. Um den Druckknopf 20' nun auch noch um eine zusätzliche zweite Wegstrecke in das Gehäuseteil 11 hineindrücken zu können, ist es zunächst notwendig, den Druckknopf 20' von seiner Verriegelungsstellung in seine Entriegelungsstellung zu drehen, d. h. die Polarisationsausnehmungen 240 des Druckknopfkopfs 24' durch Rotation des Druckknopfes 20' um die Symmetrieachse seines Druckknopfstifts 21' in die Nähe der Polarisationszapfen 130 zu bringen, so dass die Polarisationsausnehmungen 240 die Polarisationszapfen 130 bei einem dadurch ermöglichten weiteren Hineindrücken umgreifen. An die Polarisationszapfen 130 anschließend besitzt das Gehäuseteil 11 in seiner Durchgangsöffnung 110' eine Innenkontur 13' in Form einer konzentrischen, ringförmigen Verjüngung. Ist der Druckknopf 20' bereits um die zweite Wegstrecke eingeführt, so wird durch diese Innenkontur 13' ein noch tieferes Einstecken des Druckknopfes 20' zumindest indirekt endgültig verhindert. Im vorliegenden Beispiel ist dabei schließlich das weitere Federelement, nämlich die Kegelfeder 42, zwischen dem Druckknopfkopf 24' und der Innenkontur 13' angeordnet und wird durch das weitere Hineindrücken des Druckknopfes 20' schließlich maximal komprimiert. In dieser Stellung ist der Druckknopf 20' tiefstmöglich in das Steckverbindergehäuse 11 eingeführt.

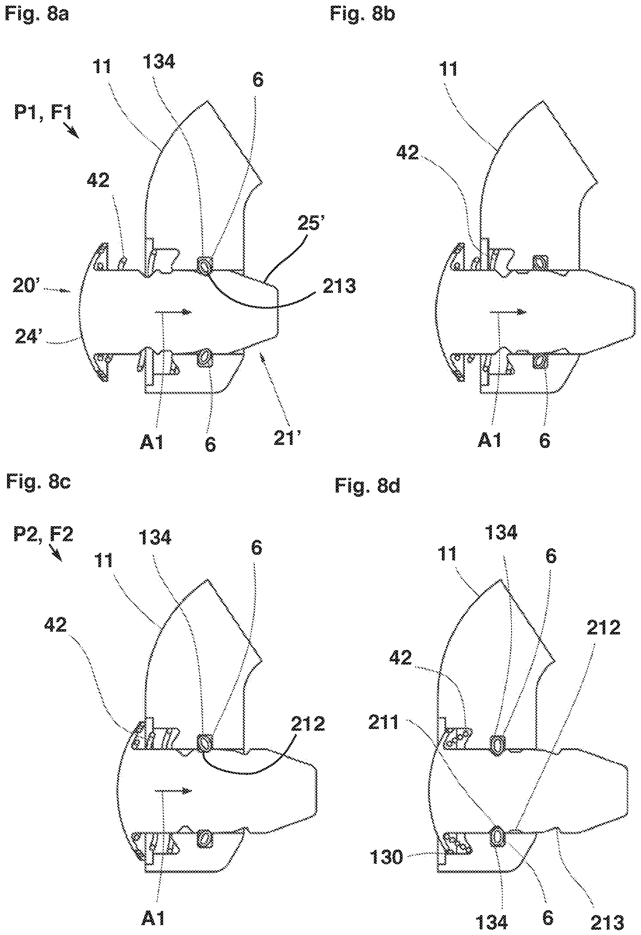

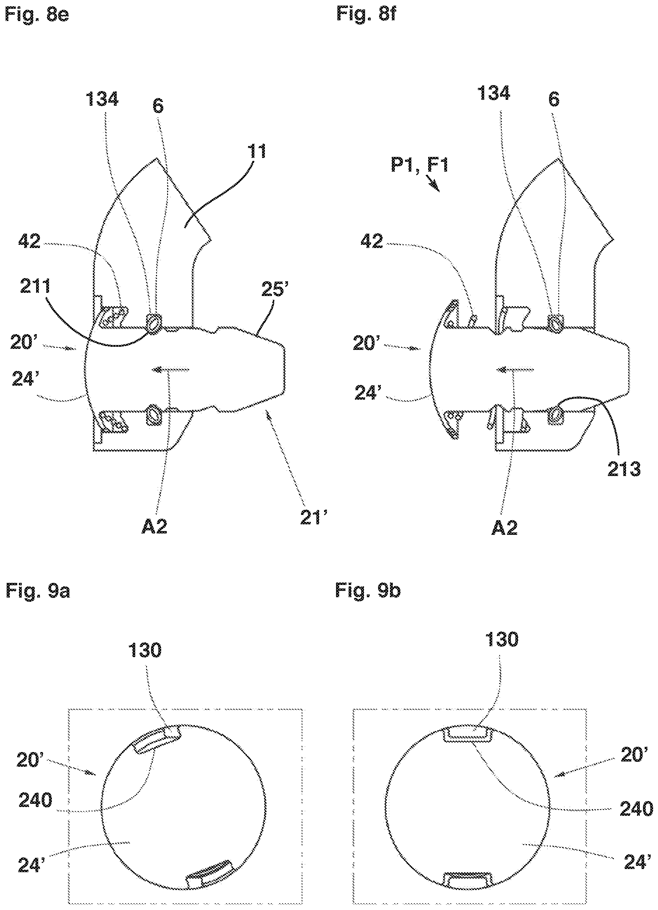

Gleichzeitig kann die mit ihrem Außenbereich 62 in einer Gehäusenut 134 der Innenkontur 13' der Durchgangsöffnung 110' angeordnete asymmetrische Spiralfeder 6 mit ihrem Innenbereich 61 in die Entriegelungsrille 211 des Druckknopfstifts 21' eintauchen, um somit in ihre Entriegelungsstellung zu kippen und in Zusammenwirken mit der Kegelfeder 42 eine Entriegelung zu ermöglichen. Die Figur 8a bis 8d und Figur 9a und b verdeutlichen diesen Vorgang in einer Schnittdarstellung, wobei nachfolgend anhand von Figur 8a bis 8f die Funktionsweise insbesondere der Fixierungsmechanik der Betätigungsvorrichtung 2' einer Verriegelungsmechanik eines erfindungsgemäßen Gehäuses zur Verdeutlichung der Fixierungsmechanik lediglich zusammen mit einer Durchgangsöffnung 110' in einem ersten Gehäuseteil 11 und ohne ein zweites Gehäuseteil 12 und ein mit dem Druckknopf 20' zusammenwirkendes Verriegelungselement 5 gemäß Figur 2 und Figur 4 dargestellt ist.

Die Figur 8a zeigt den Druckknopf 20', der zunächst aus seiner darin dargestellten Halteposition heraus mit seinem Druckknopfstift 21' in Einsteckrichtung tiefer in die Durchgangsöffnung 110' des Gehäuseteils 11 eingeführt werden soll. Die ringförmige asymmetrische Spiralfeder 6 ist mit ihrem äußeren Bereich 61 in der Gehäusenut 134 der Durchgangsöffnung 110' angeordnet. Dabei ist sie in ihrer Verriegelungsausrichtung bzw. Fixierungsausrichtung ausgerichtet, lässt also nur eine Bewegung des Druckknopfes 20' in einer ersten Bewegungsrichtung A1, nämlich in Einführrichtung zu, verhindert aber eine Bewegung in einer zweiten Bewegungsrichtung A2, welche der ersten Bewegungsrichtung A1 entgegengesetzt ist. In der gezeigten ersten fixierenden Position F1 bzw. Halteposition des Druckknopfs 20', der einer ersten entriegelnden Position P1 des Gehäuseteils 11 einer hier nicht dargestellten Verriegelungsmechanik entspricht, ist die Spiralfeder 6 in dieser Position des Druckknopfes 20' mit ihrem Innenbereich 61 in der Halterille 213 angeordnet. Grundsätzlich kann sie in dieser Position sowohl in ihrer Verriegelungsausrichtung bzw. Fixierungsausrichtung als auch in ihrer Entriegelungsausrichtung ausgerichtet sein, denn sie könnte durch eine entsprechende Bewegung des Druckknopfes 20' zwischen diesen beiden Ausrichtungen kippen. Dennoch bedarf es auch bei Einnahme ihrer Verriegelungsausrichtung zumindest einer erheblichen Kraft, um den Druckknopf 20' aus dem Gehäuseteil 11 zu entfernen, so dass dies nicht unabsichtlich geschehen kann. Im vorliegenden Beispiel ist die Spiralfeder 6 jedoch in ihrer Verriegelungsrichtung gezeigt, ermöglicht also ohne Weiteres ein tieferes Einstecken des Druckknopfes 20' in das Gehäuseteil 11, wie es in der Figur 8b dargestellt ist.

In der Figur 8c ist dargestellt, wie der Druckknopf 20' um eine erste Wegstrecke in das Gehäuseteil 11 hineingesteckt ist, wodurch die Spiralfeder 6 mit ihrem Innenbereich 61 in die Verriegelungsrille 212 eingreift. Durch die Verriegelungsrille 212 ist die Absicherung gegen ein Herausziehen des Druckknopfes 20' aus dem Steckverbindergehäuse 11 noch verstärkt. Der Druckknopf 20' befindet sich dabei in einer das Gehäuseteil 11 mit der hier nicht dargestellten Verriegelungsmechanik verriegelnden Position P2 und außerdem in einer entsprechenden fixierenden Position F2 des Druckknopfs 20', d. h. der Druckknopf 20' kann in dieser Stellung das Gehäuseteil 11 mit einem hier nicht gezeigten Gehäuseteil 12 verriegeln.

In der Figur 8d ist Folgendes dargestellt: Durch das weitere Einstecken des Druckknopfes 20' um eine zusätzliche zweite Wegstrecke gelangt die Spiralfeder 6 mit ihrem Innenbereich 61 in die Entriegelungsrille 211. Da die Entriegelungsrille 211 größer ist als die Verriegelungsrille 212, kann nun die Spiralfeder 6 durch ein geringfügiges Herausbewegen des Druckknopfes 20' aus dem Steckverbindergehäuse 11 von ihrer Verriegelungsausrichtung bzw. Fixierungsausrichtung in ihre Entriegelungsausrichtung kippen. Daher ist die Spiralfeder 6 an dieser Stelle in einer Zwischenposition dargestellt, in der sie gerade von ihrer Verriegelungsausrichtung in ihre Entriegelungsausrichtung kippt.

Die Figur 8e zeigt den Druckknopf 20' in nahezu der gleichen Position und unterscheidet sich von der vorangegangenen Darstellung lediglich dadurch, dass die Spiralfeder 6 durch ein äußerst geringfügiges Herausbewegen des Druckknopfes 20' aus dem Gehäuseteil 11 in ihrer Entriegelungsausrichtung ausgerichtet ist.

Die Figur 8f zeigt, wie der Druckknopf 20' gegenüber der vorangegangenen Darstellung um die erste und die zweite Wegstrecke aus dem Gehäuseteil 11 herausbewegt wurde. Der Druckknopf 20' befindet sich somit wie in Figur 8a in seiner ersten fixierenden Position F1 der Fixierungsmechanik der Betätigungsvorrichtung 2', die einer ersten entriegelnden Position P1 einer hier nicht dargestellten Verriegelungsmechanik des Gehäuseteils 11 entspricht. Die Spiralfeder 6 ist gleichzeitig mit ihrem Innenbereich 61 wieder in der Halterille 213 angeordnet und ist weiterhin bereits durch ein, z. B. händisches, äußerst geringfügiges Hineindrücken des Druckknopfes 20' wieder in ihre Verriegelungsausrichtung gebracht. Auch in dieser Position kann sie einer Entnahme des Druckknopfes 20' durch die Kontur der Halterille 213 einen erheblichen Widerstand entgegensetzen, so dass eine solche Entnahme nicht ungewollt geschieht.

Die Figur 9a zeigt den Druckknopf 20' in einer Draufsicht auf seinen Druckknopfkopf 24', d. h. die Blickrichtung entspricht der Symmetrieachse des Druckknopfstifts 21'. Der Druckknopf 20' befindet sich in einer Verriegelungsstellung, da seine Polarisationsausnehmungen 240 sich noch nicht in der Nähe der Polarisationszapfen 130, also in Blickrichtung vor den Polarisationszapfen 130, befinden. Mit einfachen Worten gesagt, ist der Druckknopf 20' in seiner Verriegelungsstellung gegenüber seiner Entriegelungsstellung verdreht. Einerseits stößt somit beim Versuch, den Druckknopf 20' tiefer in das Gehäuseteil 11 hineinzudrücken, der Druckknopfkopf 24' gegen die Polarisationszapfen 130 oder zumindest gegen einen Bereich der Polarisationszapfen 130. Andererseits ist die Spiralfeder 6 gleichzeitig, wie es in der Figur 8c dargestellt ist, in ihrer Verriegelungsausrichtung ausgerichtet und mit ihrem Innenbereich 61 in der Verriegelungsrille 212 angeordnet. Dadurch verhindert sie auch ein Herausbewegen des Druckknopfes 20' aus dem Gehäuseteil 11. Der Druckknopf 20' befindet sich somit in seiner Verriegelungsposition. Er kann ohne weiteres weder in der zweiten Bewegungsrichtung A2 aus dem Steckverbindergehäuse 11 herausbewegt werden noch kann er in der ersten Bewegungsrichtung A1 tiefer in das Gehäuseteil 11 hineinbewegt werden. In dieser Verriegelungsposition kann er das Gehäuseteil 11 z. B. mit einem hier nicht gezeigten zweiten Gehäuseteil 12 verriegeln. Dies kann z .B. dadurch geschehen, dass er mit seinem in das Innere des Gehäuseteils 11 hineinragenden Abschnitt gemäß vorstehend anhand von Figur 1 beschrieben in eine Ausnehmung des Gehäuseteils 12 greift und/oder indem er bevorzugt mit einem vorstehend anhand von Figur 2 und Figur 4 beschriebenen Verriegelungselement 5 analog der Betätigungsvorrichtung 2 von Figur 4 mit dem Verriegelungselement 5 zusammenwirkt, so dass das Gehäuseteil 11 und das Gehäuseteil 12 aneinander verriegelt und zudem abdichtend gegeneinanderpresst sind.

Die Figur 9b zeigt den Druckknopf 20' aus gleicher Ansicht in einer Entriegelungsstellung. Der Druckknopf 20' ist dabei gegenüber der vorangegangenen Darstellung um die Symmetrieachse des Druckknopfstifts 32 leicht nach rechts gedreht. Es ist leicht erkennbar, dass die Polarisationsausnehmungen 240 aus Blickrichtung nun direkt vor den Polarisationszapfen 130, d. h. in der Nähe der Polarisationszapfen 130, angeordnet sind. Dadurch ist es möglich, den Druckknopf 20' um die zweite Wegstrecke in das Gehäuseteil 11 hineinzudrücken, indem die Polarisationsausnehmungen 240 des Druckknopfkopfs 24' die jeweiligen Polarisationszapfen 130 umgreifen. Dabei kann sich der Druckknopf 20' also aus seiner Verriegelungsposition, wie sie in der Figur 8c dargestellt ist, in eine Position bewegen, wie sie in der Figur 8d dargestellt ist.

Zur Verdeutlichung seiner mittels Drehung bereitgestellten vorstehenden Stellungen kann der Druckknopfkopf 24' geeignete nicht dargestellte Markierungen zur optischen Kennzeichnung seiner Position aufweisen.

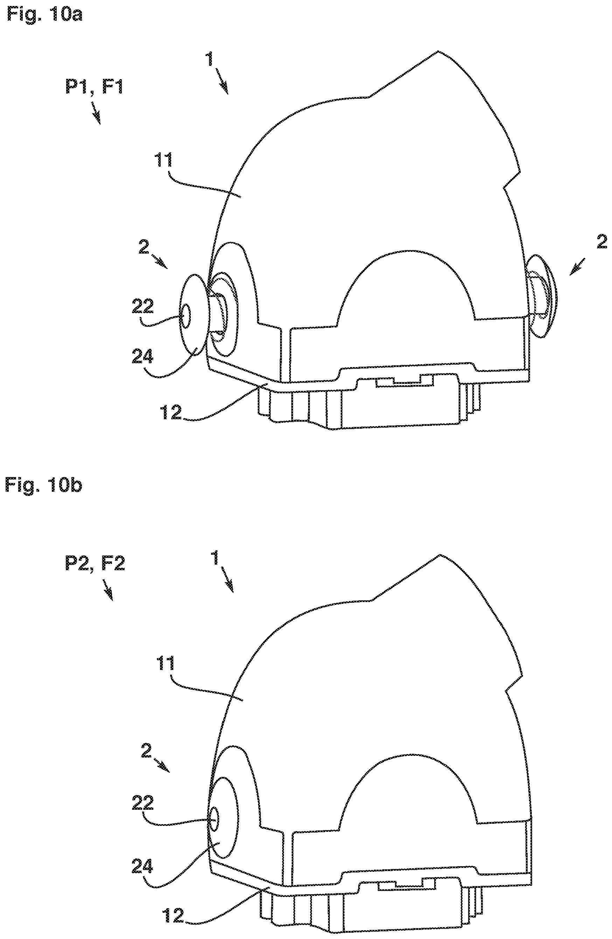

Figur 10a zeigt ein aus zwei Gehäuseteilen 11, 12 zusammengesetztes Gehäuse 1 mit einer Verriegelungsmechanik nach einer Ausführung der Erfindung in entriegelnder Position P1 und Figur 10b zeigt das Gehäuse 1 von Figur 10a in verriegelnder Position P2. Das Gehäuse 1 von Figur 10a und b umfasst eine erste und zweite Verriegelungsmechanik mit beispielhaft jeweils einer Betätigungsvorrichtung 2 nach Figur 3, die an gegenüberliegenden Wänden des Gehäuses 1 angeordnet sind, wobei das erste Gehäuseteil 11 ein Gehäuseoberteil und das zweite Gehäuseteil 12 ein Gehäuseunterteil eines Steckverbinders ist.

Der von außen betätigbare Kopf 24 des Druckknopfs 20 ist in der ersten entriegelnden Position P1 von der äußeren Wand des ersten Gehäuseteils 11 beabstandet und in der zweiten verriegelnden Position P2 im wesentlichen formschlüssig mit der äußeren Wand des ersten Gehäuseteils 11 an der Durchgangsöffnung 110 angeordnet.

Auf diese Weise ist eine optische Rückmeldung des Verriegelungsstatus der Betätigungsvorrichtung 2 der Verbindungsmechanik von Figur 10a und b verdeutlicht und eine einfach zu handhabende, komfortable und unmissverständliche Anordnung bereitgestellt. Dies gilt auch für die in Figur 10a und b nicht dargestellte Betätigungsvorrichtung 2' von Figur 7.

Auch wenn in den Figuren verschiedene Aspekte oder Merkmale der Erfindung jeweils in Kombination gezeigt sind, ist für den Fachmann - soweit nicht anders angegeben - ersichtlich, dass die dargestellten und diskutierten Kombinationen nicht die einzig möglichen sind. Insbesondere können einander entsprechende Einheiten oder Merkmalskomplexe aus unterschiedlichen Ausführungsbeispielen miteinander ausgetauscht werden.

### Verriegelungsmechanik für Steckverbindergehäuse

### Bezugszeichenliste

- 1: Gehäuse
- 11: Gehäuseoberteil, erstes Gehäuseteil
- 110, 110': Öffnung, Durchgangsöffnung
- 111: Rand
- 12: Gehäuseunterteil, zweites Gehäuseteil
- 121: Rand
- 125: Stufung
- 13, 13': Kontur, Innenkontur
- 130: Polarisationszapfen
- 131: erste fixierende Ausnehmung, Halteausnehmung
- 132: zweite fixierende Ausnehmung, Verriegelungsausnehmung
- 133: Führungsbereich
- 134: Gehäusenut
- 14: Aufnahme, Freiraum
- 15: Kanal
- 150: Erweiterung
- 16: Dichtung

- 2, 2': Betätigungsvorrichtung
- 20, 20': Druckknopf
- 200: Öffnung
- 21, 21', 21": zylindrischer Druckknopfstift
- 211, 211': Entriegelungsrille
- 212, 212': Verriegelungsrille
- 213: Halterille
- 23: Verriegelungsöffnung
- 24, 24': Kopf, Druckknopfkopf
- 240: Polarisationsausnehmung
- 25, 25': Konischer Abschnitt

- 22: Entriegelungsstift
- 220: Aufnahmeausnehmung
- 231: Rückstellabschrägung mit Haltebereich
- 232: zylindrischer Abschnitt
- 233: Entriegelungsausnehmung

- 3: Verriegelungskugel
- 30: Kugelkäfig

- 41: Spiralfeder, erstes Federelement
- 42: Kegelfeder, zweites Federelement
- 45: Federelement, drittes Federelement

- 5: Verriegelungselement, Fanghaken
- 50: Öffnung, Durchgang
- 51: Haken
- 52: Bogen, Kontur
- 53: Abflachung, Abschrägung
- 54: Schulter
- 55: Ebene

- 6: asymmetrische Spiralfeder
- 60: einzelne Spirale der asymmetrischen Spiralfeder
- 61: Innenbereich der asymmetrischen Spiralfeder
- 62: Außenbereich der asymmetrischen Spiralfeder
- 601: große Achse einer einzelnen Spirale der Spiralfeder
- 602: kleine Achse einer einzelnen Spirale der Spiralfeder
- P: Druck
- P1: erste entriegelnde Position
- P2: zweite verriegelnde Position
- F1, F2: erste, zweite fixierende Position

- A: Axial
- A1: erste axiale Bewegungsrichtung in Einführrichtung
- A2: zweite axiale Bewegungsrichtung entgegen der Einführrichtung
- R: Radial
- S: Schwenkbewegung
- SL: Schnittlinie
- S1: Spalt, Abstand

## Patentansprüche

1. Gehäuse (1) eines Steckverbinders mit einem ersten (11) und zweiten (12) Gehäuseteil und mit wenigstens einer Verriegelungsmechanik, zur Bereitstellung einer ersten entriegelnden Position (P1) und einer zweiten verriegelnden Position (P2) der beiden Gehäuseteile (11, 12), mit
- einem Druckknopf (20, 20'), der sich in seiner axialen Längsrichtung durch eine Durchgangsöffnung (110, 110') des ersten Gehäuseteils (11) in das Innere des Gehäuses (1) erstreckt;
- wobei der Druckknopf (20, 20') relativ zu dem Gehäuse (1) zwischen einer vorbestimmten ersten (F1) und zweiten (F2) axialen (A) Position verschiebbar angeordnet ist, die jeweils mit der ersten (P1) und zweiten (P2) Position der beiden Gehäuseteile (11, 12) korrespondiert; und mit
- einem im Inneren des Gehäuses (1) vorgesehenen Verriegelungselement (5);
**dadurch gekennzeichnet, dass**
der Druckknopf (20, 20') und das Verriegelungselement (5) derart ausgebildet und angeordnet sind, dass der Druckknopf (20, 20') in Druckkontakt mit dem Verriegelungselement (5) steht und mit dem Verriegelungselement (5) derart zusammenwirkt, dass bei einer axialen (A) Verschiebung des Druckknopfs (20, 20') von seiner ersten (F1) in seine zweite (F2) Position die zweite verriegelnde Position (P2) der beiden Gehäuseteile (11, 12) mit einem radialen (R) Druckkontakt zwischen den beiden Gehäuseteilen (11, 12) bereitgestellt wird, so dass ein Spalt (S1) zwischen dem ersten (11) und zweiten (12) Gehäuseteil minimiert ist.

2. Gehäuse (1) nach Anspruch 1
**dadurch gekennzeichnet, dass**
der Druckknopf (20, 20') mit dem Verriegelungselement (5) derart zusammenwirkt, dass
mittels der axialen (A) Verschiebung des Druckknopfs (20, 20') von seiner ersten Position (F1) in seine zweite Position (F2) außerdem ein axialer (A) Druckkontakt zwischen dem Verriegelungselement (5) und dem zweiten Gehäuseteil (12) bereitgestellt wird.

3. Gehäuse (1) nach Anspruch 1 oder 2
**dadurch gekennzeichnet, dass**
in der zweiten Position (P2) der beiden Gehäuseteile (11,12) mittels einem in dem Spalt (S1) vorgesehenen Dichtelement (16) eine Dichtung des verriegelten Gehäuses (1) bereitgestellt ist.

4. Gehäuse (1) nach einem der Ansprüche 1 bis 3
**dadurch gekennzeichnet, dass**
das Verriegelungselement (5) derart ausgebildet und angeordnet ist, dass es in der ersten Position (F1) des Druckknopfs (20, 20') unter Druckkontakt mit dem Druckknopf (20, 20') steht, wobei das Verriegelungselement (5) ortsfest in dem ersten Gehäuseteil (11) gehalten ist,
und dass das Verriegelungselement (5) in der zweiten Position (F2) des Druckknopfs (20, 20') unter radialem (R) Druckkontakt mit dem Druckknopf (20, 20') steht und dabei außerdem unter radialem (R) Druckkontakt mit dem zweiten Gehäuseteil (12) steht.

5. Gehäuse (1) nach einem der Ansprüche 1 bis 4
**dadurch gekennzeichnet, dass**
das Verriegelungselement (5) im wesentlichen U-förmig in Form eines Bügels mit einer länglichen Schulter (54) ausgebildet ist; wobei sich ausgehend von der Schulter (54) zwei parallele Schenkel erstrecken, an deren Enden jeweils ein Haken (51) ausgebildet ist; und wobei die Schenkel mit der Schulter (54) einen abgerundeten Bogen (52) bilden, so dass ein Durchgang (50) bereitgestellt ist; und wobei die Dicke des Verriegelungselements (5) von dem Bogen (52) zu seiner Schulter (54) hin mit einer Abschrägung (53) abgeflacht ist; und wobei
der Druckknopf (20, 20') sich mit seinem in dem Inneren des Gehäuses (1) angeordneten Abschnitt in den Durchgang (50) erstreckt und in Druckkontakt mit dem Bogen (52) des Durchgangs (50) steht.

6. Gehäuse (1) nach Anspruch 5
**dadurch gekennzeichnet, dass**
in dem ersten Gehäuseteil (11) ein Kanal (15) vorgesehen ist, in dem ein Federelement (45) und die Schulter (54) des Verriegelungselements (5) derart angeordnet sind, dass das Federelement (45) einen radialen Druck (R) auf das Verriegelungselement (5) ausübt, wobei der Kanal (15) in seinem Verlauf von der Schulter (54) zu dem Bogen (52) des Verriegelungselements (5) eine Erweiterung (150) aufweist, so dass eine schienenartige Führung des Verriegelungselements (5) bereitgestellt ist, die mit der Schulter (52) und der Abschrägung (53) des Verriegelungselements (5) derart zusammenwirkt, dass bei der Verschiebung des Druckknopfs (20, 20') eine axiale (A) und radiale (R) Schwenkbewegung (S) des Verriegelungselements (5) ausgeführt wird.

7. Gehäuse (1) nach Anspruch 5 oder 6
**dadurch gekennzeichnet, dass**
in dem zweiten Gehäuseteil (12) eine Stufung (125) ausgebildet ist, mit der die Haken (51) des Verriegelungselements (5) zusammenwirken, so dass der radiale (R) Druckkontakt der beiden Gehäuseteile (11, 12) in der zweiten verriegelnden Position (P2) bereitgestellt ist.

8. Gehäuse (1) nach einem der Ansprüche 5 bis 7
**dadurch gekennzeichnet, dass**
das bügelförmige Verriegelungselement (5) an den Enden seiner Schenkel geschlossen ist, so dass ein zusammenhängender Haken (51) mit dem Durchgang (50) bereitgestellt ist.

9. Gehäuse (1) nach einem der Ansprüche 1 bis 8
**dadurch gekennzeichnet, dass**
der Druckknopf (20, 20') einen sich durch die Durchgangsöffnung (110, 110') des ersten Gehäuseteils (11) erstreckenden im wesentlichen zylindrischen Druckknopfstift (21, 21') umfasst, an dem in dem Inneren des Gehäuses (1) ein sich verjüngender konischer Abschnitt (25, 25') ausgebildet ist;
wobei das Verriegelungselement (5) in der ersten Position (F1) unter radialem (R) Druckkontakt mit dem konischen Abschnitt (25, 25') steht, und bei einer Verschiebung des Druckknopfs (20, 20') von der ersten (F1) zu der zweiten (F2) Position unter axialem (A) und radialem (R) Druckkontakt mit dem konischen Abschnitt (25, 25') steht, und in der zweiten Position (F2) unter radialem (R) Druckkontakt mit dem Druckknopfstift (21, 21') steht.

10. Gehäuse (1) nach einem der Ansprüche 1 bis 9
**dadurch gekennzeichnet, dass**
eine Fixierungsmechanik des Druckknopfs (20, 20') vorgesehen ist, die eine unter axialem (A) Druck (P) auf den Druckknopf (20, 20') lösbare Fixierung des Druckknopfs (20, 20') in seiner ersten (F1) und zweiten (F2) Position bereitstellt, wonach die erste (F1) und zweite (F1) Position jeweils eine erste (F1) und zweite (F2) fixierende Position ist.

11. Gehäuse (1) nach Anspruch 10
**dadurch gekennzeichnet, dass**
die Fixierungsmechanik des Druckknopfs (20) neben dem Druckknopf (20) eine Vielzahl weitere koaxial mit dem Druckknopf (20) in und/oder an der Durchgangsöffnung (110) angeordnete und mit dem Druckknopf (20) und/oder mit einer in der Durchgangsöffnung (110) des ersten Gehäuseteils (11) ausgebildeten Kontur (13) und/oder miteinander zusammenwirkende Elemente mit einem Entriegelungsstift (22), einer Spiralfeder (41) und einer Kegelfeder (42) und mit wenigstens zwei Verriegelungskugeln (3) umfasst.

12. Gehäuse (1) nach Anspruch 11
**dadurch gekennzeichnet, dass**
die Fixierungsmechanik des Druckknopfs (20') neben dem Druckknopf (20') eine koaxial mit dem Druckknopfstift (21') des Druckknopfs (20') angeordnete ringförmige, asymmetrische Spiralfeder (6) umfasst, die in einer Kontur (13') in der Durchgangsöffnung (110') des ersten Gehäuseteils (11) angeordnet ist, und eine Kegelfeder (42) umfasst, und an dem Druckknopfstift (21)' eine Kontur mit wenigstens einer Entriegelungsrille (211) und/oder Verriegelungsrille (212) und/oder Halterille (213) ausgebildet sind, die mit der Spiralfeder (6) zusammenwirken.

13. Gehäuse (1) nach Anspruch 1
**dadurch gekennzeichnet, dass**
das Verriegelungselement (5) einstückig mit dem zweiten Gehäuseteil (12) ausgebildet ist.

14. Gehäuse (1) nach einem der Ansprüche 1 bis 13,
**dadurch gekennzeichnet, dass**
der Druckknopf (20, 20') derart ausgebildet und angeordnet ist, dass ein betätigbarer Kopf (24, 24') des Druckknopfs (20, 20') in der ersten entriegelnden Position (P1) von einer äußeren Wand des ersten Gehäuseteils (11) beabstandet ist und in der zweiten verriegelnden Position (P2) im wesentlichen formschlüssig mit der äußeren Wand des ersten Gehäuseteils (11) an der Durchgangsöffnung (110, 110') angeordnet ist.

15. Gehäuse (1) nach Anspruch 14
**dadurch gekennzeichnet, dass**
das Gehäuse (1) eine erste und zweite Verriegelungsmechanik umfasst, die an gegenüberliegenden Wänden des Gehäuses (1) angeordnet sind, wobei das erste Gehäuseteil (11) ein Gehäuseoberteil und das zweite Gehäuseteil (12) ein Gehäuseunterteil des Steckverbinders ist.

## Claims

1. Housing (1) of a plug connector with a first housing part (11) and a second housing part (12) and with at least one locking mechanism, for providing a first unlocking position (P1) and a second locking position (P2) of the two housing parts (11, 12), with
- a push button (20, 20'), which extends in its axial longitudinal direction through a through-opening (110, 110') of the first housing part (11) into the interior of the housing (1);
- wherein the push button (20, 20') is arranged so as to be slidingly movable relative to the housing (1) between a predetermined first (F1) axial (A) position and a predetermined second (F2) axial (A) position, which respectively correspond to the first position (P1) and to the second position (P2) of the two housing parts (11, 12); and with
- a locking element (5) provided in the interior of the housing (1);
**characterized in that**
the push button (20, 20') and the locking element (5) are configured and arranged such that the push button (20, 20') is in pressure contact with the locking element (5) and cooperates with the locking element (5) such that,
in the event of an axial (A) movement of the push button (20, 20') from its first (F1) to its second (F2) position, the second locking position (P2) of the two housing parts (11, 12) with a radial (R) pressure contact between the two housing parts (11, 12) is provided so that a gap (S1) between the first housing part (11) and second housing part (12) is minimized.

2. The housing (1) according to claim 1,
**characterized in that**
the push button (20, 20') cooperates with the locking element (5) such that,
by means of the axial (A) movement of the push button (20, 20') from its first position (F1) to its second position (F2), an axial (A) pressure contact between the locking element (5) and the second housing part (12) is also provided.

3. The housing (1) according to claim 1 or 2,
**characterized in that,**
in the second position (P2) of the two housing parts (11, 12), a sealing of the locked housing (1) is provided by means of a sealing element (16) provided in the gap (S1).

4. The housing (1) according to one of claims 1 to 3,
**characterized in that**
the locking element (5) is configured and arranged so as to be in pressure contact with the push button (20, 20') in the first position (F1) of the push button (20, 20'), wherein the locking element (5) is held so as to be fixed in the first housing part (11),
and **in that** the locking element (5) is in radial (R) pressure contact with the push button (20, 20') and is concurrently additionally in radial (R) pressure contact with the second housing part (12) in the second position (F2) of the push button (20, 20').

5. The housing (1) according to one of claims 1 to 4,
**characterized in that**
the locking element (5) is configured so as to be substantially U-shaped in the form of a U-bolt with an elongated shoulder (54); wherein two parallel arms extend from the shoulder (54), a hook (51) being formed at the respective ends of said arms; and wherein the arms form a rounded arch (52) with the shoulder (54) so as to provide a passage (50);
and wherein the thickness of the locking element (5) flattens with a chamfer (53) from the arch (52) to its shoulder (54); and wherein the push button (20, 20') extends into the passage (50) with its section arranged in the interior of the housing (1) and is in pressure contact with the arch (52) of the passage (50).

6. The housing (1) according to claim 5,
**characterized in that**
a channel (15) is provided in the first housing part (11), in which channel (15) a spring element (45) and the shoulder (54) of the locking element (5) are arranged such that the spring element (45) exerts a radial pressure (R) on the locking element (5), wherein
the channel (15) has a widened portion (150) in its course from the shoulder (54) to the arch (52) of the locking element (5) so that a rail-like guidance of the locking element (5) is provided, the widened portion (150) cooperating with the shoulder (52) and the chamfer (53) of the locking element (5) such that an axial (A) and radial (R) pivoting movement (S) of the locking element (5) is performed with the movement of the push button (20, 20').

7. The housing (1) according to claim 5 or 6,
**characterized in that**
a step (125) is formed in the second housing part (12), the hooks (51) of the locking element (5) cooperating with said step (125) so as to provide the radial (R) pressure contact of the two housing parts (11, 12) in the second locking position (P2).

8. The housing (1) according to one of claims 5 to 7,
**characterized in that**
the U-bolt-shaped locking element (5) is closed at the ends of its arms so that one continuous hook (51) is provided with the passage (51).

9. The housing (1) according to one of claims 1 to 8,
**characterized in that**
the push button (20, 20') comprises a substantially cylindrical push button pin (21, 21') extending through the through-opening (110, 110') of the first housing part (11), on which push button pin (21, 21') a tapering conical section (25, 25') is formed in the interior of the housing (1);
wherein the locking element (5) is in radial (R) pressure contact with the conical section (25, 25') in the first position (F1), is in axial (A) and radial (R) pressure contact with the conical section (25, 25') during a movement of the push button (20, 20') from the first (F1) to the second (F2) position, and is in radial (R) pressure contact with the push button pin (21, 21') in the second position (F2).

10. The housing (1) according to one of claims 1 to 9,
**characterized in that**
a fixing mechanism of the push button (20, 20') is provided, which provides a releasable fixation of the push button (20, 20') with axial (A) pressure (P) on the push button (20, 20') in the first (F1) and second (F2) positions of the latter, whereby the first (F1) and second (F1) positions are respectively a first (F1) and a second (F2) fixing position.

11. The housing (1) according to claim 10,
**characterized in that**
the fixing mechanism of the push button (20) comprises, in addition to the push button (20), a plurality of further elements arranged coaxially to the push button (20) in and/or at the through-opening (110) and cooperating with the push button (20) and/or with a contour (13) formed in the through-opening (110) of the first housing part (11) and/or with one another, wherein said elements comprise an unlocking pin (22), a coil spring (41) and a conical spring (42) and at least two locking balls (3).

12. The housing (1) according to claim 11,
**characterized in that**
the fixing mechanism of the push button (20') comprises, in addition to the push button (20'), an annular, asymmetrical coil spring (6) arranged coaxially to the push button pin (21') of the push button (20'), said coil spring (6) being arranged in a contour (13') in the through-opening (110') of the first housing part (11), as well as a conical spring (42), and a contour with at least one unlocking groove (211) and/or locking groove (212) and/or holding groove (213), which cooperate with the coil spring (6), is formed on the push button pin (21)'.

13. The housing (1) according to claim 1,
**characterized in that**
the locking element (5) is formed so as to be integral with the second housing part (12).

14. The housing (1) according to one of claims 1 to 13,
**characterized in that**
the push button (20, 20') is configured and arranged such that an actuatable head (24, 24') of the push button (20, 20') in the first unlocking position (P1) is at a distance from an outer wall of the first housing part (11) and, in the second locking position (P2), is arranged substantially flush with the outer wall of the first housing part (11) at the through-opening (110, 110').

15. The housing (1) according to claim 14,
**characterized in that**
the housing (1) comprises a first and a second locking mechanism arranged on opposite walls of the housing (1), wherein the first housing part (11) is an upper part of the housing and the second housing part (12) is a lower part of the housing of the plug connector.

## Revendications

1. Boîtier (1) d'un connecteur à fiche avec une première partie de boîtier (11) et une deuxième partie de boîtier (12) et avec au moins un mécanisme de verrouillage, pour assurer une première position de déverrouillage (P1) et une deuxième position de verrouillage (P2) des deux parties de boîtier (11, 12), avec
- un bouton-poussoir (20, 20'), qui s'étend dans sa direction longitudinale axiale à travers une ouverture de passage (110, 110') de la première partie de boîtier (11) à l'intérieur du boîtier (1) ;
- le bouton-poussoir (20, 20') étant disposé de manière à être déplaçable par glissement par rapport au boîtier (1) entre une première position axiale (A) prédéterminée (F1) et une deuxième position axiale (A) prédéterminée (F2), qui correspondent respectivement à la première position (P1) et à la deuxième position (P2) des deux parties de boîtier (11, 12) ; et avec
- un élément de verrouillage (5) fourni à l'intérieur du boîtier (1) ;
**caractérisé en ce que**
le bouton-poussoir (20, 20') et l'élément de verrouillage (5) sont configurés et disposés de telle sorte que le bouton-poussoir (20, 20') est en contact de pression avec l'élément de verrouillage (5) et coopère avec l'élément de verrouillage (5) de telle sorte que, en cas de déplacement axial (A) du bouton-poussoir (20, 20') de sa première (F1) à sa deuxième (F2) position, la deuxième position de verrouillage (P2) des deux parties de boîtier (11, 12) avec un contact de pression radial (R) entre les deux parties de boîtier (11, 12) est assurée de sorte qu'une fente (S1) entre la première partie de boîtier (11) et la deuxième partie de boîtier (12) est minimisée.

2. Boîtier (1) selon la revendication 1,
**caractérisé en ce que**
le bouton poussoir (20, 20') coopère avec l'élément de verrouillage (5) de telle sorte que,
par le déplacement axial (A) du bouton-poussoir (20, 20') de sa première position (F1) à sa deuxième position (F2), un contact de pression axial (A) entre l'élément de verrouillage (5) et la deuxième partie de boîtier (12) est également assuré.

3. Boîtier (1) selon la revendication 1 ou 2,
**caractérisé en ce que,**
dans la deuxième position (P2) des deux parties de boîtier (11, 12), une étanchéité du boîtier verrouillé (1) est assurée au moyen d'un élément d'étanchéité (16) fourni dans la fente (S1).

4. Boîtier (1) selon l'une des revendications 1 à 3,
**caractérisé en ce que**
l'élément de verrouillage (5) est configuré et disposé de manière à être en contact de pression avec le bouton-poussoir (20, 20') dans la première position (F1) du bouton-poussoir (20, 20'), l'élément de verrouillage (5) étant tenu de manière à être fixe dans la première partie de boîtier (11),
et **en ce que** l'élément de verrouillage (5) est en contact de pression radial (R) avec le bouton-poussoir (20, 20') et est simultanément également en contact de pression radial (R) avec la deuxième partie de boîtier (12) dans la deuxième position (F2) du bouton-poussoir (20, 20').

5. Boîtier (1) selon l'une des revendications 1 à 4,
**caractérisé en ce que**
l'élément de verrouillage (5) est configuré de manière à être sensiblement en forme de U sous la forme d'un arceau avec un épaulement allongé (54) ; dans lequel deux bras parallèles s'étendent depuis l'épaulement (54), un crochet (51) étant formé aux extrémités respectives desdits bras ; et dans lequel les bras forment un arc arrondi (52) avec l'épaulement (54) de manière à y pourvoir un passage (50) ;
et dans lequel l'épaisseur de l'élément de verrouillage (5) s'aplatit avec un chanfrein (53) depuis l'arc (52) dans la direction de son épaulement (54) ; et dans lequel
le bouton-poussoir (20, 20') s'étend dans le passage (50) avec sa section disposée à l'intérieur du boîtier (1) et est en contact de pression avec l'arc (52) du passage (50).

6. Boîtier (1) selon la revendication 5,
**caractérisé en ce qu'**
un canal (15) est fourni dans la première partie de boîtier (11), un élément de ressort (45) et l'épaulement (54) de l'élément de verrouillage (5) étant disposés dans le canal (15) de telle sorte que l'élément de ressort (45) exerce une pression radiale (R) sur l'élément de verrouillage (5), le canal (15) présentant une partie élargie (150) dans son parcours depuis l'épaulement (54) jusqu'à l'arc (52) de l'élément de verrouillage (5), de sorte qu'un guidage de l'élément de verrouillage (5) en forme de rail est assuré, la partie élargie (150) coopérant avec l'épaulement (52) et le chanfrein (53) de l'élément de verrouillage (5) de sorte qu'un mouvement de pivotement (S) axial (A) et radial (R) de l'élément de verrouillage (5) se réalise avec le déplacement du bouton-poussoir (20, 20').

7. Boîtier (1) selon la revendication 5 ou 6,
**caractérisé en ce qu'**
un gradin (125) est formé dans la deuxième partie de boîtier (12), les crochets (51) de l'élément de verrouillage (5) coopérant avec ledit gradin (125) de manière à assurer le contact de pression radial (R) des deux parties de boîtier (11, 12) dans la deuxième position de verrouillage (P2).

8. Le boîtier (1) selon l'une des revendications 5 à 7,
**caractérisé en ce que**
l'élément de verrouillage en forme d'arceau (5) est fermé aux extrémités de ses bras de sorte qu'un crochet continu (51) est fourni avec le passage (51).

9. Boîtier (1) selon l'une des revendications 1 à 8,
**caractérisé en ce que**
le bouton-poussoir (20, 20') comprend une goupille de bouton-poussoir (21, 21') sensiblement cylindrique qui s'étend à travers l'ouverture de passage (110, 110') de la première partie de boîtier (11), une section conique en pointe (25, 25') étant formée sur la goupille de bouton-poussoir (21, 21') à l'intérieur du boîtier (1) ; l'élément de verrouillage (5) étant en contact de pression radial (R) avec la section conique (25, 25') dans la première position (F1), en contact de pression axial (A) et radial (R) avec la section conique (25, 25') pendant un déplacement du bouton-poussoir (20, 20') de la première (F1) à la seconde (F2) position, et en contact de pression radial (R) avec la goupille de bouton-poussoir (21, 21') dans la seconde position (F2).

10. Boîtier (1) selon l'une des revendications 1 à 9,
**caractérisé en ce qu'**
un mécanisme de fixation du bouton-poussoir (20, 20') est fourni, qui assure une fixation libérable du bouton-poussoir (20, 20') sous une pression (P) axiale (A) sur le bouton-poussoir (20, 20') dans les première (F1) et seconde (F2) positions de ce dernier, les première (F1) et seconde (F1) positions étant donc respectivement une première (F1) et une seconde (F2) position de fixation.

11. Boîtier (1) selon la revendication 10,
**caractérisé en ce que**
le mécanisme de fixation du bouton-poussoir (20) comprend, en plus du bouton-poussoir (20), une pluralité d'autres éléments disposés coaxialement au bouton-poussoir (20) dans et/ou à l'ouverture de passage (110) et coopérant avec le bouton-poussoir (20) et/ou avec un contour (13) formé dans l'ouverture de passage (110) de la première partie de boîtier (11) et/ou entre eux, lesdits éléments comprenant une goupille de déverrouillage (22), un ressort hélicoïdal (41) et un ressort conique (42) et au moins deux billes de verrouillage (3).

12. Boîtier (1) selon la revendication 11,
**caractérisé en ce que**
le mécanisme de fixation du bouton-poussoir (20') comprend, en plus du bouton-poussoir (20'), un ressort hélicoïdal (6) annulaire et asymétrique disposé coaxialement à la goupille de bouton-poussoir (21') du bouton-poussoir (20'), ledit ressort hélicoïdal (6) étant disposé dans un contour (13') dans l'ouverture de passage (110') de la première partie de boîtier (11), ainsi qu'un ressort conique (42), et un contour avec au moins une rainure de déverrouillage (211) et/ou une rainure de verrouillage (212) et/ou une rainure de support (213), qui coopèrent avec le ressort hélicoïdal (6), est formé sur la goupille de bouton-poussoir (21)'.

13. Boîtier (1) selon la revendication 1,
**caractérisé en ce que**
l'élément de verrouillage (5) est formé en une seule pièce avec la deuxième partie de boîtier (12).

14. Boîtier (1) selon l'une des revendications 1 à 13,
**caractérisé en ce que**
le bouton-poussoir (20, 20') est configuré et disposé de telle sorte qu'une tête actionnable (24, 24') du bouton-poussoir (20, 20'), dans la première position de déverrouillage (P1), se trouve à distance d'une paroi extérieure de la première partie de boîtier (11) et, dans la deuxième position de verrouillage (P2), est disposée sensiblement à fleur avec la paroi extérieure de la première partie de boîtier (11) au niveau de l'ouverture de passage (110, 110').

15. Boîtier (1) selon la revendication 14,
**caractérisé en ce que**
le boîtier (1) comprend un premier et un second mécanisme de verrouillage disposés sur des parois opposées du boîtier (1), la première partie de boîtier (11) étant une partie supérieure du boîtier et la seconde partie de boîtier (12) étant une partie inférieure du boîtier du connecteur à fiche.
